# EUROPEAN PATENT APPLICATION

(11) **EP 4 769 167 A1**
(43) Date of publication of application: **01.07.2026**
(21) Application number: 24856293.6
(22) Date of filing: 06.08.2024
(51) Int. Cl.: G06F 15/173

(54) **CALCULATION DEVICE AND DATA TRANSFER METHOD**

(30) Priority: 24.08.2023 JP 2023136237
(71) Applicant: DENSO CORPORATION, Kariya-city, Aichi-pref. 448-8661 (JP)
(72) Inventor: KOSAKI, Masanori, Kariya-city, Aichi-pref., 448-8661 (JP)
(74) Representative: Winter, Brandl - Partnerschaft mbB
(86) International application number: PCT/JP2024/028064
(87) International publication number: WO 2025/041602

(57) **Abstract**

An arithmetic device (10) includes multiple PEs (12) arranged in two-dimensional manner. Each PE (12) has a selector (24) that outputs input data in a set direction. The PE (12) performs data movement via the selector (24) with another non-adjacent PE (12) located diagonally, or performs data movement via the selector (24) in own PE (12) by moving data from a register (22) to an arithmetic circuit (20), by processing a selector setting command and an input output command in a single operation.

## Description

### CROSS REFERENCE TO RELATED APPLICATION

This application is based on Japanese Patent Application No. 2023-136237 filed on August 24, 2023, the disclosure of which is incorporated herein by reference.

### TECHNICAL FIELD

The present disclosure relates to an arithmetic device and a data movement method.

### BACKGROUND ART

An arithmetic device including multiple processors arranged in an array (two-dimensionally) has been developed.

In such arithmetic device, there is a demand for improved data processing speed. For example, Patent Literature 1 describes an arithmetic device including multiple first processing cores arranged in an array and multiple second processing cores arranged in an array. In the arithmetic device, a subset of the first processing cores is arranged between a data processing circuitry and the multiple second processing cores.

### PRIOR ART LITERATURE

### PATENT LITERATURE

Patent Literature 1: US 11086574 B

### SUMMARY

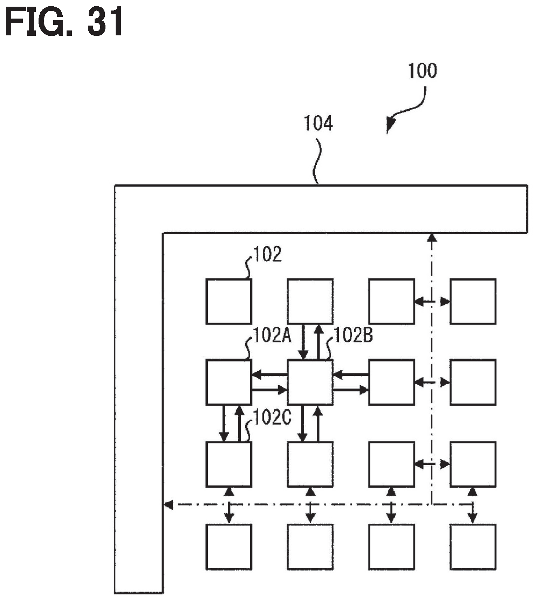

In an arithmetic device where the processors are arranged in an array, broadcast communication or direct neighbor communication may be used to input and output data between one processor and another processor. Broadcast communication enables access between all processors (processing elements, hereinafter referred to as "PEs") 102 and an external memory 104, as indicated by the dashed lines in the arithmetic device 10 shown in FIG. 31. Direct neighbor communication, as indicated by solid lines in FIG. 31, enable access between two adjacent PEs 12 arranged in the vertical direction or horizontal direction.

Even if data is input or output between two PEs 102 that are not adjacent vertically or horizontally using broadcast communication and direct neighbor communication, direct data input output cannot be performed between two PEs 102 that are not adjacent to one another. For example, when data is moved from the PE 102B to the PE 102C, it is necessary to perform the data movement in two different processes, such as moving the data from the PE 102B to the PE 102A and then moving the data from the PE 102A to the PE 102C. For this reason, it takes time to move data between the PEs 102 in aggregation processing of data stored in multiple PEs 102, such as Sum processing or Max processing.

When data is moved in the same PE 102, such as between a register and an arithmetic circuit, multiple times of processing may be needed. In such a case, it also takes time to move data in the same PE 102.

The present disclosure aims to provide an arithmetic device and a data movement method that can improve data movement speed in the processor(s).

In order to achieve the above-described object, the present disclosure provides the following technical solutions. The symbols in parentheses described in this section and in the claims are merely examples showing the correspondence with specific feature described in the embodiment set forth below as one aspect of the present disclosure, and do not limit the technical scope of the present disclosure.

According to an aspect of the present disclosure, an arithmetic device includes multiple processors, each of which includes a selector configured to receive data input to the processor and output the data in a set direction. The multiple processors each performs a data movement via the selector with another non-adjacent processor or performs a data movement via the selector in own processor, by processing a selector setting command and an input output command of the data in a single operation.

For example, suppose that a processor B moves data to a processor C, which is not adjacent but arranged in diagonal direction. In this case, the processor B outputs data to the processor C via an adjacent processor A. According to the above configuration, the processor A, which the data passes through, outputs the data transmitted from the processor B to the processor C in accordance with the selector setting command and the data input output command, that is, the processor A does not actually perform any processing on the data. In other words, data is actually output directly from the processor B to the processor C without any processing in the processor A. Regarding the processor B, the processor B outputs the data, which is output from the processor adjacent on right side, to the processor D, which is arranged adjacent to lower side of the processor B, in accordance with the setting command of the selector. The processor B further receives data, which is output from the processor arranged adjacent to upper side of the processor B. In this way, by giving the same selector setting command to all processors, all processors can simultaneously directly move data to processors in diagonal directions (non-adjacent processors).

The data movement within the processor is also performed via the selector. The data movement within the processor is, for example, data movement between a register and an arithmetic circuit.

The data movement between processors that are not adjacent to one another and the data movement in one processor are performed by processing the selector setting command and a data input output command in a single operation.

The above-described data movement using the selector can increase data movement speed within the processor or between the processors.

In the above-described arithmetic device, the multiple processors each includes a register, which stores the data and is connected to the selector.

In the above-described arithmetic device, the multiple processors each includes multiple selectors.

In the above-described arithmetic device, the multiple processors each includes an arithmetic circuit connected to the selector. The arithmetic circuit is configured to execute an arithmetic processing on the data. The data movement in the multiple processors and the arithmetic processing executed by the arithmetic circuit are performed by processing the selector setting command and the input output command of the data in a single operation.

In the above-described arithmetic device, a part of the multiple processors each includes the arithmetic circuit for executing a specific processing. In execution of the specific processing, the data movement is performed in the part of the multiple processors via the corresponding selectors.

In the above-described arithmetic device, a wiring used for the data movement in the multiple processors is provided. The wiring is provided to each of the multiple processors arranged at a predetermined interval.

In the above-described arithmetic device, in sorting of multiple pieces of score data each of which indicates a size of the data held by each of the multiple processors, the multiple processors each is configured to: determine a magnitude of the score data, which is to be moved to the adjacent processor via the selector; perform an exchange process that moves the score data to the adjacent processor according to a determination result of the magnitude of the score data; and repeat the exchange process for different combinations of adjacent two of the multiple processors.

In the above-described arithmetic device, the data input to each of the multiple processors is associated with score data, which indicates a size of the data. The multiple processors each is configured to: determine a magnitude of the score data, which is to be moved via the selector, between own processor and the adjacent processor; perform the data movement of the score data with the adjacent processor in accordance with a determination result of the magnitude of the score data; store movement destination data indicating a movement destination of the score data; and perform the data movement with the adjacent processor based on the movement destination data.

In the above-described arithmetic device, the data input to each of the multiple processors is associated with score data, which indicates a size of the data, or index data, which indicates an order of the data. The multiple processors each is configured to: determine a magnitude of the score data or the index data, which is to be moved via the selector, between own processor and the adjacent processor; perform the data movement of the score data or the index data with the adjacent processor in accordance with a determination result of the magnitude of the score data or the index data; store movement destination data indicating a movement destination of the score data or the index data; and perform the data movement with the adjacent processor based on the movement destination data.

In the above-described arithmetic device, the multiple processors each is associated with a relative address, which indicates an address where the data is stored. The multiple processors each is configured to: determine a magnitude of the relative address, which is to be moved via the selector, between own processor and the adjacent processor; perform the data movement of the relative address with the adjacent processor in accordance with a determination result of the magnitude of the relative address; and store movement destination data indicating a movement destination of the relative address. After the data is associated with the relative address after movement, the multiple processors each performs the data movement with the adjacent processor in a movement order reverse to an order indicated by the movement destination data.

In the above-described arithmetic device, when the data related to the score data, the index data, or a relative address is input from an external memory to the multiple processors, the multiple processors each performs the data movement with the adjacent processor based on the movement destination data.

In the above-described arithmetic device, the multiple processors are virtually divided into multiple first groups each including three or more processors adjacent to one another. The multiple processors are configured to perform a first sorting process by determining, for the three or more processors included in each of the multiple first groups, the magnitude of the index data and performing the data movement of the index data and the data associated with the index data according to a determination result of the magnitude of the index data. The multiple processors are virtually divided into multiple second groups in different manner from the multiple first groups, each of the multiple second groups include three or more processors adjacent to one another. The multiple processors are configured to perform a second sorting process by determining, for the three or more processors included in each of the multiple second groups, the magnitude of the index data and performing the data movement of the index data and the data associated with the index data according to a determination result of the magnitude of the index data. The multiple processors are configured to repeatedly perform the first sorting process and the second sorting process.

In the above-described arithmetic device, when the number of multiple pieces of the data to be sorted in the multiple processors is greater than the number of the multiple processors, each of the multiple processors stores more than one pieces of data by assigning identification numbers to the more than one pieces of data. The multiple processors are virtually divided into multiple processor groups such that each of the multiple processors included in the same processor group stores the data assigned with the same identification number. The multiple processor groups are set such that the multiple processors included in one of the multiple processor groups has a reverse order in at least one of a row direction or a column direction with respect to a reference processor group, which is defined among the multiple processor groups. The multiple processors are configured to perform the first sorting process for each of the multiple first groups divided in one of the multiple processor groups, and then perform the second sorting process for each of the multiple second groups that are divided across the multiple processor groups. The multiple processors are configured to repeatedly perform the first sorting process and the second sorting process.

In the above-described arithmetic device, a first spare processor may be provided. The first spare processor is arranged adjacent to one or more outer edge processors located at an edge portion of the multiple processors arranged in two-dimensional manner. The first spare processor is configured to sort multiple pieces of the data stored in the one or more outer edge processors in the second sorting process.

In the above-described arithmetic device, the data input to each of the multiple processors is divided into multiple data items such that each data item has a predetermined number of bits. Each of the multiple processors performs processing on the data in units of each data item divided to have the predetermined number of bits.

In the above-described arithmetic device, a spare processor may be provided. The first spare processor does not have an arithmetic circuit but has a selector and a register for storing the data. The data movement is performed between one of the multiple processors and the spare processor via the selector.

In the above-described arithmetic device, an operation for implementing a required function of the arithmetic device is set in advance for each of the multiple processors or set by the data. Each of the multiple processors performs the operation, which is set different from another processor, according to a request for the required function.

According to another aspect of the present disclosure, a data movement method for an arithmetic device is provided. The arithmetic device includes multiple processors and the multiple processors each includes a selector configured to receive data input to the processor and output the data in a set direction. The data movement method includes performing, using the multiple processors, a data movement via the selector with another non-adjacent processor or performing, using the multiple processors, a data movement via the selector in own processor, by processing a selector setting command and an input output command of the data in a single operation.

### EFFECTS OF INVENTION

The present disclosure can increase data movement speed of processors.

### BRIEF DESCRIPTION OF DRAWINGS

The above and other objects, features and advantages of the present disclosure will become more apparent from the following detailed description made with reference to the accompanying drawings. In the drawings:
FIG. 1 is a schematic diagram illustrating a configuration of PEs included in an arithmetic device according to an embodiment;
FIG. 2 is a schematic diagram illustrating data movement from a save register of one PE to a register of another PE that is not adjacent to the one PE according to an embodiment;
FIG. 3 is a schematic diagram illustrating data movement from a register of one PE to a save register of another PE that is not adjacent to the one PE according to an embodiment;
FIG. 4 is a schematic diagram illustrating data movement from one PE to multiple other PEs in the same row according to an embodiment;
FIG. 5 is a schematic diagram illustrating data movement from one PE to all of the remaining PEs of an embodiment;
FIG. 6 is a schematic diagram illustrating data transfer from an external memory to one PE and data movement from the one PE to all PEs according to an embodiment;
FIG. 7 is a schematic diagram illustrating data movement from an external memory in each row according to an embodiment;
FIG. 8 is a schematic diagram illustrating data movement from an external memory to all PEs according to another embodiment;
FIG. 9 is a schematic diagram illustrating data movement accompanying arithmetic processing executed by an arithmetic circuit according to an embodiment;
FIG. 10 is a schematic diagram illustrating data movement when an arithmetic device according to an embodiment performs a convolution operation;
FIG. 11 is a schematic diagram illustrating data movement when specific arithmetic circuits are only provided in partial PEs within the arithmetic device according to an embodiment;
FIG. 12 is a schematic diagram illustrating data movement when specific arithmetic circuits are only provided in partial PEs within the arithmetic device according to an embodiment;
FIG. 13 shows a schematic diagram illustrating a configuration of wiring connecting the PEs according to an embodiment, and specifically shows an embodiment in which all adjacent PEs are connected by the wiring in (A), and specifically shows an embodiment in which partial PEs are connected by the wiring by thinning out the PEs in (B);
FIG. 14 shows a schematic diagram illustrating a first diagonal data movement in four adjacent PEs in which wiring is thinned out as shown in (A), and a schematic diagram in which each group of four adjacent PEs in the arithmetic device are indicated by dashed lines as shown in (B);
FIG. 15 shows a schematic diagram illustrating a second diagonal data movement in four adjacent PEs in which wiring is thinned out as shown in (A), and a schematic diagram in which each group of four adjacent PEs in the arithmetic device are indicated by dashed lines as shown in (B);
FIG. 16 is a schematic diagram illustrating data movement when sorting is performed in the arithmetic device according to an embodiment;
FIG. 17 is a schematic diagram illustrating data movement when sorting of one row of data is performed in a single operation in the arithmetic device according to an embodiment;
FIG. 18 is a schematic diagram illustrating data movement between PEs when sorting of one row of data is performed in a single operation in the arithmetic device according to an embodiment;
FIG. 19 is a schematic diagram illustrating data movement when sorting of multiple rows of data is performed in the arithmetic device according to an embodiment;
FIG. 20 is a diagram illustrating the order of data associated with index data before sorting in (A) and after sorting in (B) when the sorting is executed by the arithmetic device according to an embodiment;
FIG. 21 is a schematic diagram illustrating movement of data associated with index data, where (A) shows the first or odd-numbered processing and (B) shows the second or even-numbered processing, according to an embodiment;
FIG. 22 is a diagram illustrating relative addresses and input data that are rearranged by a sorting process of the arithmetic device when moving data to a relative address position according to an embodiment;
FIG. 23 is a diagram illustrating a data sorting process executed for each group according to an embodiment;
FIG. 24 is a diagram illustrating a first sorting process executed when the number of data to be sorted is greater than the number of PEs according to an embodiment;
FIG. 25 is a diagram illustrating a second sorting process executed when the number of data to be sorted is greater than the number of PEs according to an embodiment;
FIG. 26 is a schematic diagram illustrating spare PEs provided adjacent to outer edge PEs according to an embodiment;
FIG. 27 is a diagram illustrating a relationship between data used in a convolution operation and PEs according to an embodiment;
FIG. 28 is a schematic diagram of an arithmetic device including spare PEs according to an embodiment;
FIG. 29 is a diagram illustrating a one-dimensional sorting process accompanying SIMD process according to an embodiment;
FIG. 30 is a diagram illustrating a two-dimensional sorting process accompanying SIMD process according to an embodiment; and
FIG. 31 is a schematic diagram illustrating data movement between two PEs included in a conventional arithmetic device.

### DESCRIPTION OF EMBODIMENTS

The following will describe embodiments of the present disclosure with reference to the drawings. The embodiments described below show an example of the present disclosure, and the present disclosure is not limited to the specific configuration described below. In an implementation of the present disclosure, a specific configuration according to an embodiment may be adopted as appropriate.

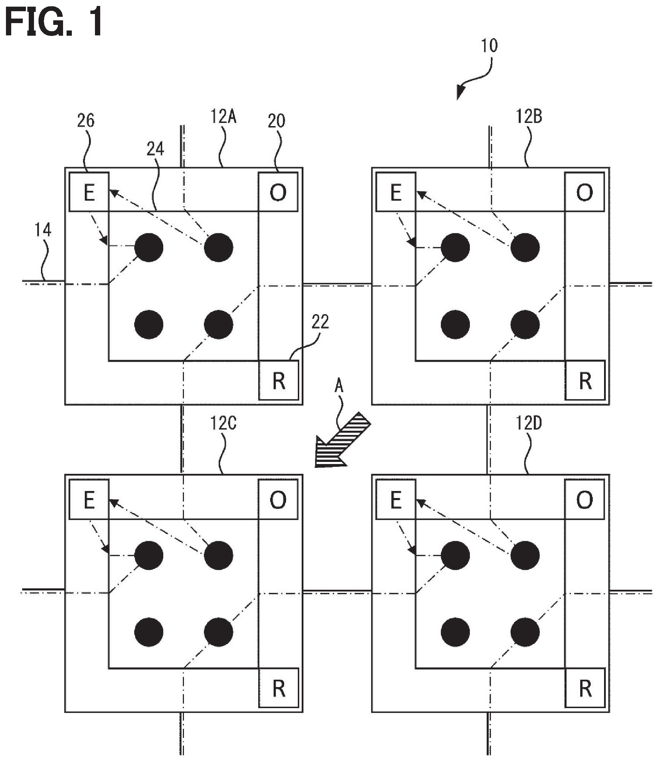

FIG. 1 is a schematic diagram of PEs (Processing Elements) 12, each of which is a processor included in an arithmetic device 10 according to the present embodiment.

The arithmetic device 10 includes multiple PEs 12. In the example of FIG. 1, four PEs 12 are arranged, such as PEs 12A to 12D, but the number of PEs 12 included in the arithmetic device 10 may be any number. Although the multiple PEs 12 are arranged in two-dimensional manner (in an array), but the PEs may be arranged in multi-dimensional manner, in three or more dimensions, which will be described later.

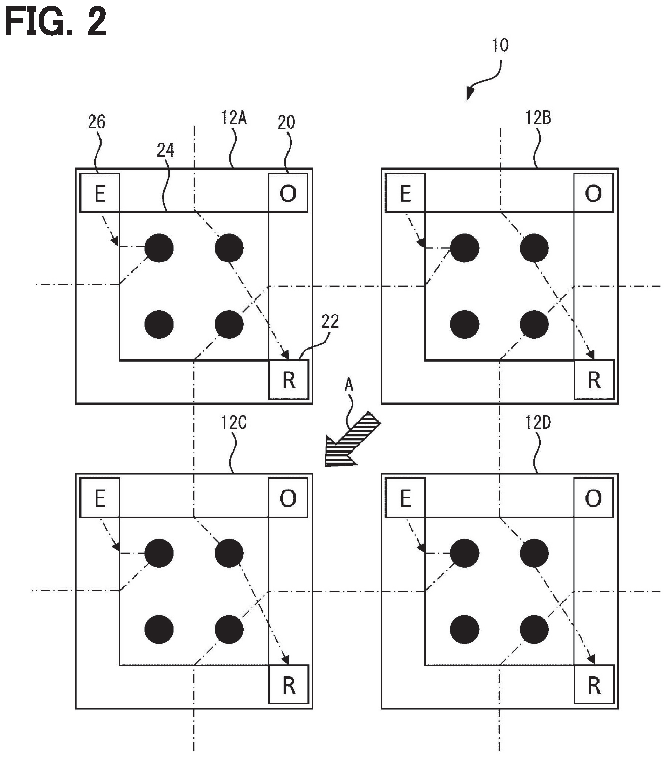

The PEs 12 included in the arithmetic device 10 are electrically connected with one another by wiring 14 for performing data movement with adjacent PEs 12. Although the wiring 14 of the PEs 12 is omitted in some drawings, such as in FIG. 2, the PEs 12 adjacent to one another are connected by the wiring 14. The data movement in the present embodiment is a concept that also includes copying of data.

The arithmetic device 10 is capable of performing various processes, such as data movement and data calculation in each PE 12. However, when the settings are prepared for each PE 12 by program, the amount of program may increase.

Therefore, an operation for executing a required function of the arithmetic device 10 may be set in advance or set by data for each PE 12, and each PE 12 may perform a different operation from one another according to the required function. It should be noted that this kind of data is setting data input to the PE 12, and is different from data that is moved between the PEs 12. By this configuration, there is no need to programmatically set the operation of each PE 12, thereby reducing the amount of program required to operate the arithmetic device 10.

The PE 12 of the present embodiment includes an arithmetic circuit 20, a register 22, a selector 24, and a save register 26.

The arithmetic circuit 20 is connected to the selector 24, and performs various arithmetic operations such as ==, !=, >, >=, <, <=, >>, <<, or, and, min, max, clip, add, sub, mul, div, mod, macc, etc. The arithmetic circuit 20 that performs the arithmetic operation can be selected by the arithmetic device 10 as appropriate. In the arithmetic device 10 of the present embodiment, one PE 12 includes multiple arithmetic circuits 20, and one PE 12 may select different arithmetic operations or multiple same arithmetic operations, from the multiple prepared operations, and perform the multiple same or different arithmetic operations simultaneously. Each PE 12 may perform a different arithmetic operation from one another, so that the arithmetic device 10 can simultaneously perform multiple different arithmetic operations by the multiple PEs.

The register 22 is a storage unit connected to the selector 24, and holds (stores) data. For example, the arithmetic circuit 20 performs arithmetic operation on the data held in the register 22, and holds the arithmetic result in the register 22.

The selector 24 outputs the data, which is input to own PE 12, in a set direction. The data may be output to the adjacent PEs 12. The data may be output to own PE, such as the arithmetic circuit 20, the register 22, the save register 26 of own PE 12. In the present embodiment, the PE 12 performs data movement with a non-adjacent PE 12 via the selector 24 by processing a setting command for the selector 24 (hereinafter referred to as a "selector setting command") and an input output command for the data (hereinafter referred to as a "data input output command") in a single operation.

The selector setting command is a command for setting the direction in which data is output by the selector 24. For example, the selector setting command sets the direction of another PE 12 to which data is to be output, or the direction of the arithmetic circuit 20, the register 22, or the save register 26 in the same PE 12 to which data is to be output. The data input output command is a command to select data to be input or output via the selector 24, and this data is held in the register 22 or the save register 26.

The PE 12 of the present embodiment performs the data movement in the own PE 12 via the selector 24 by processing a selector setting command and a data input output command in a single operation. The data movement performed via the selector 24 in the own PE 12 includes, for example, data movement between the save register 26 and the arithmetic circuit 20, data movement between the arithmetic circuit 20 and the register 22, and data movement between the register 22 and the save register 26.

The save register 26 is connected to the selector 24 and stores temporary data. The save register 26 of the present embodiment has a smaller storage capacity than the register 22, for example, a storage capacity that is sufficient to hold one data item. One data item indicates one piece or one record of data. Here, since the register 22 is capable of holding multiple data items for processing a program, it is necessary to specify an address for the data item held in the register. On the other hand, the save register 26 holds only one data item, thus address specification is not required. Therefore, data can be input to and output from the save register 26 easily and quickly. The PE 12 may be provided with multiple save registers 26 in order to hold multiple data items.

As described above, the PE 12 of the present embodiment inputs and outputs data to and from the arithmetic circuit 20, the register 22, or the save register 26, via the selector 24. The data movement between two PEs 12 is also performed via the selector 24. This data movement between two PEs 12 includes not only data movement between two adjacent PEs 12 but also includes data movement between two non-adjacent PEs 12, such as data movement from own PE to the non-adjacent PE 12 in a diagonal direction or data movement from own PE to a non-adjacent PE 12 that is located away by more than one PE.

Referring to FIG. 1, data movement via the selector 24 will be described. The dashed dotted lines in FIG. 1 indicate the diagonal data movement paths. That is, in the example of FIG. 1, arrow A shows data movement from the PE 12B to the PE 12C. At this time, data movement from the PE 12B to the PE 12C is executed by processing the selector setting command and the data input output command in a single operation.

More specifically, the data input to the PE 12B passes through the selector 24 of the PE 12B and is held (input) in the save register 26 of the PE 12B. Then, in accordance with the new processing command, the PE 12B outputs the data held in the save register 26, and the output data passes through the selector 24 and is output toward the PE 12A. The PE 12A controls the selector 24 so that the data input from the PE 12B is output toward the PE 12C. The selector 24 is controlled in accordance with the above-mentioned processing command. The selector 24 may be controlled by, for example, the arithmetic circuit 20 or by a dedicated control circuit built in the selector 24.

The PE 12C then holds (inputs) the data, which is input from the PE 12B via the PE 12A, in the save register 26 via the selector 24. In the example of FIG. 1, the data held in the save register 26 of the PE 12C is further output to another adjacent PE 12 via the selector 24 in accordance with the second processing command.

In this way, the PE 12A, through which the data is passed, simply outputs the data to the PE 12C via the selector 24, and does not perform any processing on the data. Therefore, the data is actually output directly from the PE 12B to the PE 12C. By performing such data movement process via the selector 24, the arithmetic device 10 of the present embodiment can perform data movement between the PEs 12 at a higher speed without increasing the number of wirings 14 connecting the PEs 12.

The PE 12B outputs data, which is output from right adjacent PE 12 to the PE 12D in accordance with the selector setting command, and stores data, which is output from the upper adjacent PE 12, in the save register 26. By giving the same selector setting command to all the PEs 12 in this way, each PE 12 can simultaneously directly move data to the PE 12 in the diagonal direction (non-adjacent PE 12).

In the present embodiment, a single operation processing the selector setting command and the input output command is an operation in which data output from a storage unit, such as the save register 26 or the register 22 passes through the selector 24 and is again input (stored) in the storage unit, such as the save register 26 or the register 22. As will be described later, a single operation may include the selector setting command, the input output command, and further include an arithmetic processing command for controlling the arithmetic circuit 20 to perform arithmetic processing on the data.

When an available bit width of data movement between PEs 12 is, for example, 32 bits, and one data item to be moved is 8 bits, then four data items can be moved between PEs 12 at one time. Therefore, when data is moved diagonally, for example, from the PE 12B to the PE 12C, diagonal movement in four directions can be performed simultaneously. In this way, data may be moved in multiple directions simultaneously using a movement pattern that takes into consideration the bit width of data movement between PEs 12 and the bit amount of data.

One PE 12 may include multiple selectors 24. By providing one PE 12 with multiple selectors 24, data can be moved in multiple directions simultaneously. For example, the PE 12 having four selectors 24 can simultaneously move data in four directions. For example, the PE 12 is provided with multiple selectors 24 that move data in units of one byte, and each selector 24 can move data of each byte independently from another selector. When moving four bytes of data, the PE 12 can simultaneously move the data using four selectors 24, making it possible to simultaneously move a large number of data items.

When multiple selectors 24 are provided in one PE 12, the multiple selectors 24 may share one wiring 14, or multiple wirings 14 may be provided between the PEs 12 corresponding to each selector 24.

### (Another example of data movement between PEs)

Another example of data movement between PEs 12 will be described below with reference to FIG. 2 to FIG. 5.

FIG. 2 is a schematic diagram showing data movement from the save register 26 of one PE 12 to the register 22 of another non-adjacent PE 12. In the example of FIG. 2, the data held in the save register 26 of one PE 12B is moved to the register 22 of another PE 12C.

The PE 12B outputs data, which is output from the PE 12 adjacent to right side of own PE, to the PE 12D in accordance with the selector setting command, and controls the register 22 to hold the data, which is output from the PE 12 adjacent to upper side of own PE. By giving the same selector setting command to all of the PEs 12 in this way, each PE 12 can simultaneously directly move data to the PE 12 in the diagonal direction (non-adjacent PE 12).

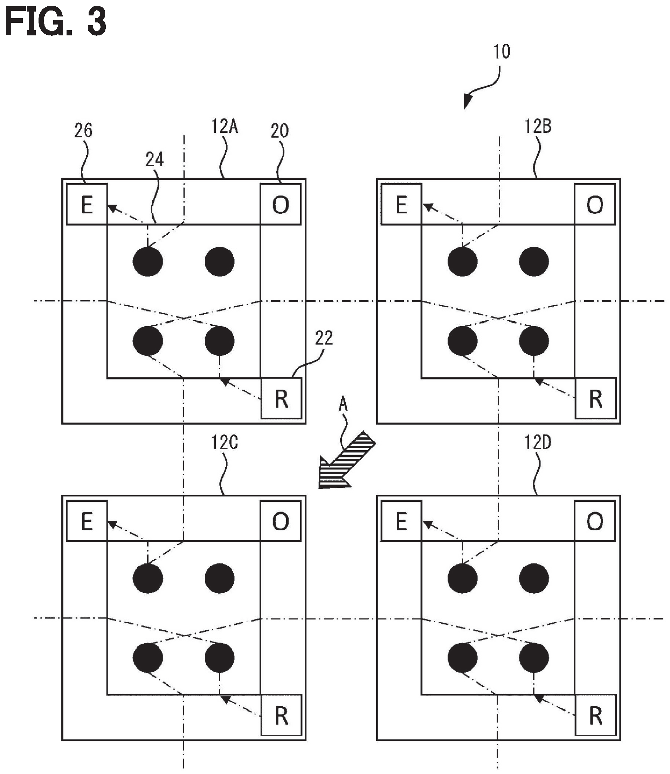

FIG. 3 is a schematic diagram showing data movement from the register 22 of one PE 12 to the save register 26 of another non-adjacent PE 12. In the example of FIG. 2, the data held in the register 22 of one PE 12B is moved to the save register 26 of another PE 12C.

The PE 12B outputs data, which is output from right adjacent PE 12 to the PE 12D in accordance with the selector setting command, and stores data, which is output from the upper adjacent PE 12, in the save register 26. By giving the same selector setting command to all of the PEs 12 in this way, each PE 12 can simultaneously directly move data to the PE 12 in the diagonal direction (non-adjacent PE 12).

As shown in FIG. 2 and FIG. 3, data is moved from the register 22 or the save register 26 of one PE 12 to the register 22 or the save register 26 of another PE 12 via the selector 24.

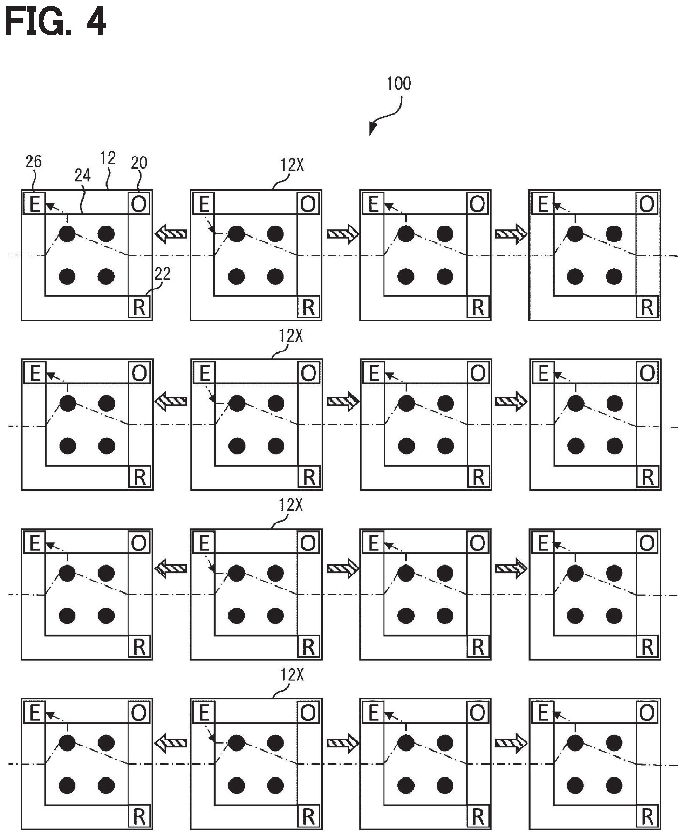

FIG. 4 is a schematic diagram showing data movement from one PE 12 to multiple other PEs 12 in the same row. FIG. 4 shows an example in which data is output from the PE 12X located in the second column from the left in the arithmetic device 10 to other PEs 12 arranged in the same row. In the example of FIG. 4, data is moved to other PEs 12 both in left and right directions with the PE 12X as the center.

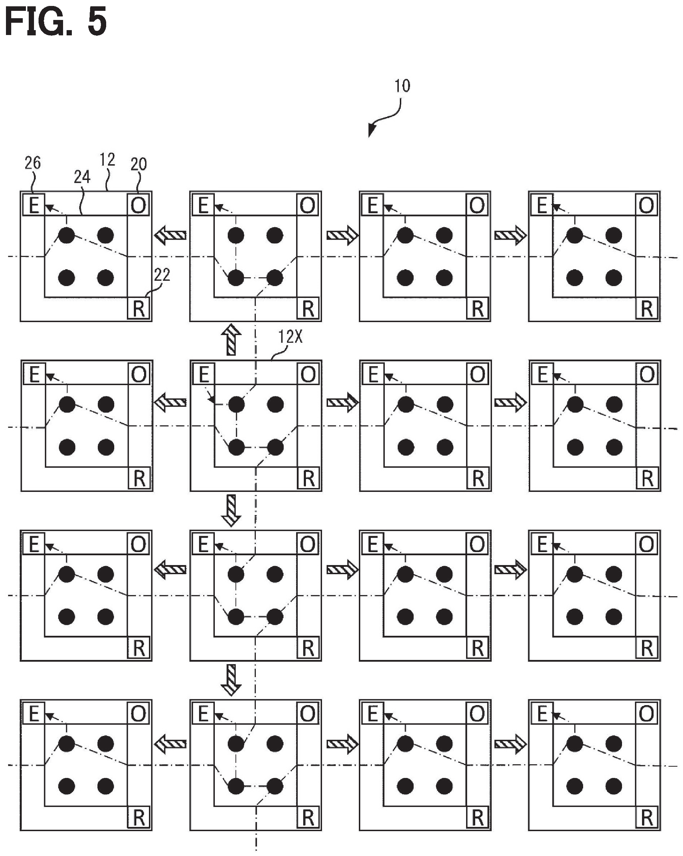

FIG. 5 is a schematic diagram showing data movement from one PE 12 to all other PEs 12. FIG. 5 shows an example in which data is output from the PE 12X located in the second column from the left and the second row from the top of the arithmetic device 10 to all other PEs 12 arranged in the same row. In the example of FIG. 5, when the PE 12X outputs data to another PE 12 in the same column, the PE 12 that has received the data outputs the received data to other PEs 12 in the same row. In this way, in the example of FIG. 5, data is moved to other PEs 12 in the up, down, left, and right directions with the PE 12X as the center.

In the examples of FIG. 4 and FIG. 5, the data input to the PE 12 is held in the save register 26. Alternatively, the data may be held in the register 22.

### (Example of data movement from external memory to PE)

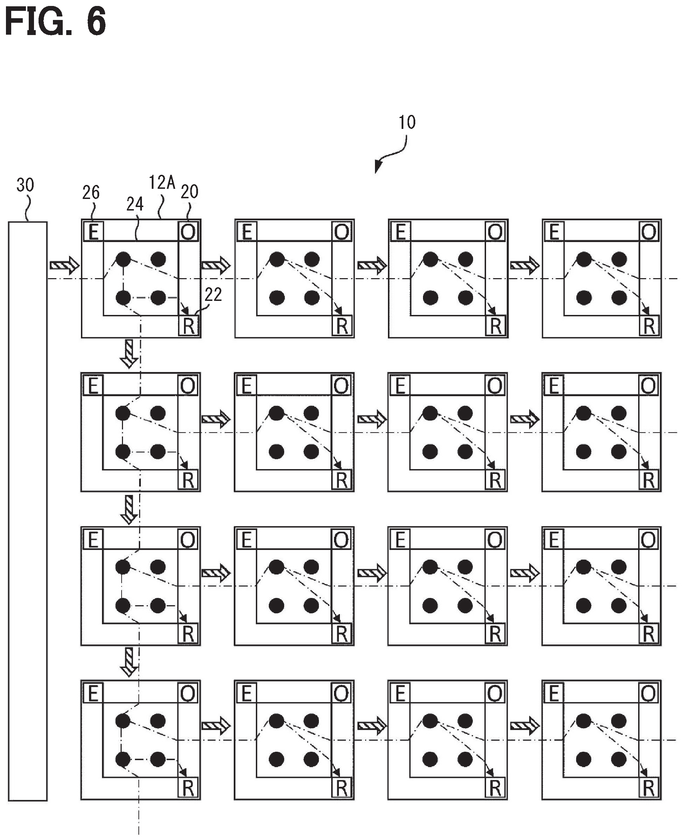

An example of data movement from an external memory 30 to the PE 12 will be described below with reference to FIG. 6 to FIG. 8.

FIG. 6 is a schematic diagram showing data movement from the external memory 30 to one PE 12 and data movement from the one PE 12 to all other PEs 12 included in the arithmetic device 10. In the example of FIG. 6, data is transferred from the external memory 30 to the upper left PE 12A, and the same data is output from the upper left PE 12A to all other PEs 12. In the example of FIG. 6, each PE 12 holds the data in the register 22 via the selector 24. This configuration enables the data can transferred from the external memory 30 to all of the PEs 12 in a single operation.

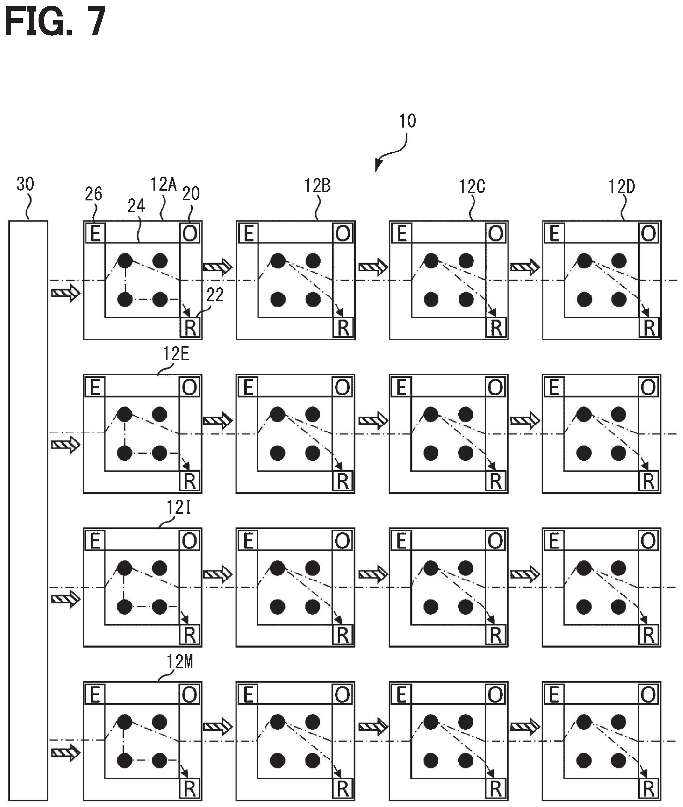

FIG. 7 is a schematic diagram showing data movement from the external memory 30 in each row. In the example of FIG. 7, the same or different data is transferred from the external memory 30 to the PEs 12A, 12E, 12I, and 12M arranged in the leftmost column of the arithmetic device, and then data is moved from the PEs 12A, 12E, 12I, and 12M to other PEs 12 in the same row, respectively. In the example of FIG. 7, each PE 12 stores data in the register 22 via the selector 24. This allows data to be transferred from the entire external memory 30 to the PEs 12 in a single operation.

Alternatively, different data may be output in steps from the external memory 30, and the register 22 of each PE 12 may hold different data from one another. For example, in the configuration of FIG. 7, data "1" is transferred from the external memory 30 to the PE 12A in the first process. In the second process, data "2" is transferred from the external memory 30 to the PE 12A, and data "1" is moved from the PE 12A to the PE 12B. In the third process, data "3" is transferred from the external memory 30 to the PE 12A, data "2" is moved from the PE 12A to the PE 12B, and data "1" is moved from the PE 12B to the PE 12C. In the fourth processing, data "4" is transferred from the external memory 30 to the PE 12A, data "3" is moved from the PE 12A to the PE 12B, data "2" is moved from the PE 12B to the PE 12C, and data "1" is moved from the PE 12C to the PE 12D. As a result, after four steps, the PE 12A holds data "4", the PE 12B holds data "3", the PE 12C holds data "2", and the PE 12D holds data "1".

When the data is transferred from the external memory 30 to each PE 12 by burst transfer, each PE 12 receives only the necessary data from the external memory 30 at the necessary timing. In the burst transfer, data may be transferred to each PE 12 one by one, but multiple data may be transferred together as a data set.

When the data stored in an arbitrary address is transferred from the external memory 30 to each PE 12, each PE 12 holds a relative address and stores, in the register 22 of the PE 12, only the data corresponding to the relative address among the data transferred from the external memory 30.

It is not necessary for all PEs 12 to have an access circuit to the external memory 30. For example, only the PEs 12 in the first column or the PEs 12 in odd-numbered columns may have the access circuits. The PE 12 which receives the data from the external memory 30 may then move the received data to another PE 12 while performing other processing, or may receive data from another PE 12. The data may be transferred or moved in compressed manner. Thus, the PEs 12 may have a function for decompressing compressed data and a function for compressing data.

The PEs 12 arranged at the end position in the column direction may be provided with access circuits for accessing the external memory 30, and data may be transferred from the external memory 30 to each column through the end PEs. The PEs 12 arranged at the left and right ends positions in the row direction may be provided with access circuits for accessing the external memory 30, and data may be transferred from the external memory 30 to the PEs 12 simultaneously from the left and right ends in the row direction. This configuration can speed up the time required for data movement. Similarly, the PEs 12 at the top and bottom positions in the column direction may be provided with access circuits for accessing the external memory 30, and data may be transferred from the external memory 30 to the PEs 12 simultaneously from the top and bottom in the column direction. The data may be transferred from the external memory 30 to the PE 12 located in the center of a row or column, and then moved from the center PE to the PEs 12 positioned upper, lower, left, or right sides.

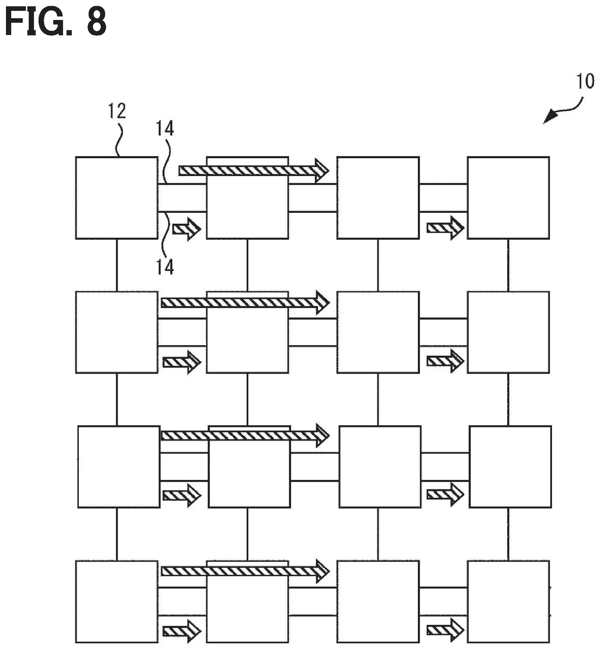

As shown in FIG. 8, a PE 12 may have two wirings 14 between itself and another adjacent PE 12 in the same row, and simultaneously perform data movement with the adjacent PE 12 and the non-adjacent PE 12 by transferring different data. The non-adjacent PE 12 may be a PE that is located two rows away. This configuration can further increase data movement speed in the PEs 12. In the following description, providing two wirings 14 between two adjacent PEs 12 is also referred to as duplication (multiplexing) of the wirings 14.

### (Data movement accompanying arithmetic processing)

In the PEs 12 of the present embodiment, the selector 24 is connected to the arithmetic circuit 20 such that the PE 12 can perform the arithmetic processing on the data moved from another PE 12 via the selector 24. That is, the PE 12 of the present embodiment makes it possible to perform data movement and arithmetic processing in a single operation by processing the selector setting command and the data input output command using the arithmetic circuit 20 in a single operation. This configuration can increase a processing speed of a combination of the arithmetic processing and the data movement.

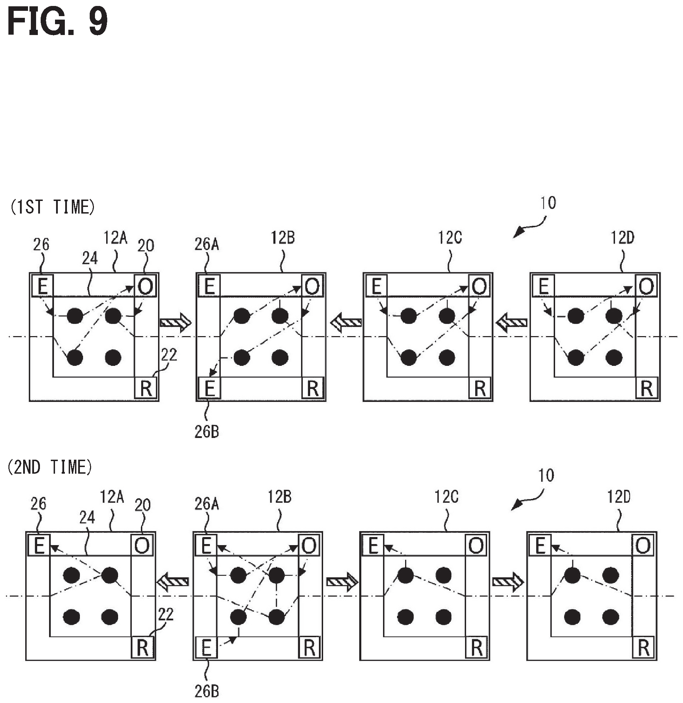

FIG. 9 is a schematic diagram showing data movement accompanying arithmetic processing executed by the arithmetic circuit 20 of the present embodiment. The example in FIG. 9 shows a case where the PE 12B located in the second column sums the results of the arithmetic processing by each of the PEs 12A to 12D arranged in the same row, and outputs the summed result to another PE 12. The PE 12B includes two save registers 26A and 26B.

In the first processing, the PEs 12A, 12C, and 12D each performs arithmetic processing on the data held in the save register 26 using the arithmetic circuit 20, and output the results to the PE 12B. That is, the PE 12B collects the results of arithmetic processing performed by multiple other PEs 12. In the PE 12B, the arithmetic circuit 20 adds up the data input from the PEs 12A, 12C, and 12D, and then stores the sum in the save register 26B.

In the second processing, the arithmetic circuit 20 of the PE 12B adds up the data held in the save register 26B of the PE 12B and the data held in the save register 26A. Then, the PE 12B outputs (expands) the summed result to other PEs 12A, 12C, and 12D. Other PEs 12A, 12C, and 12D store the data output from the PE 12B in the save register 26. The PE 12B also stores the sum in the save register 26A of own PE.

In the arithmetic processing, such as and, or, sum, in order to shorten the overall distance that data moves, data is aggregated in PE 12 (PE 12B in the example of FIG. 9) located at the center in the row direction (left and right) or column direction (up and down). Since the results of arithmetic processing are obtained in the PE 12 located at the center, the movement distance of data when outputting (copying) the results of the arithmetic processing to other PEs 12 can be decreased.

The PE 12 that collects data from PEs located upper, lower, left, or right sides may receive data using three or four inputs instead of two inputs, and perform the arithmetic processing using the input data. Therefore, the configuration of the PE 12 in which data is aggregated may be different from those of other PEs 12. In the example of FIG. 9, the PE 12B in which data is aggregated includes two save registers 26A and 26B. The PE 12 in which the data is aggregated may perform the arithmetic processing in multiple steps, such as performing arithmetic processing for each row or for each column. The wiring 14 between the PEs 12 may be duplicated, and the first processing of aggregation and the second processing of expansion may be performed at the same time as shown in FIG. 9.

The PE 12 may include multiple arithmetic circuits 20. The multiple arithmetic circuits 20 may have the same or different arithmetic processing functions. The PE 12 having multiple arithmetic circuits 20 may transfer data among the multiple arithmetic circuits 20 via the selector 24.

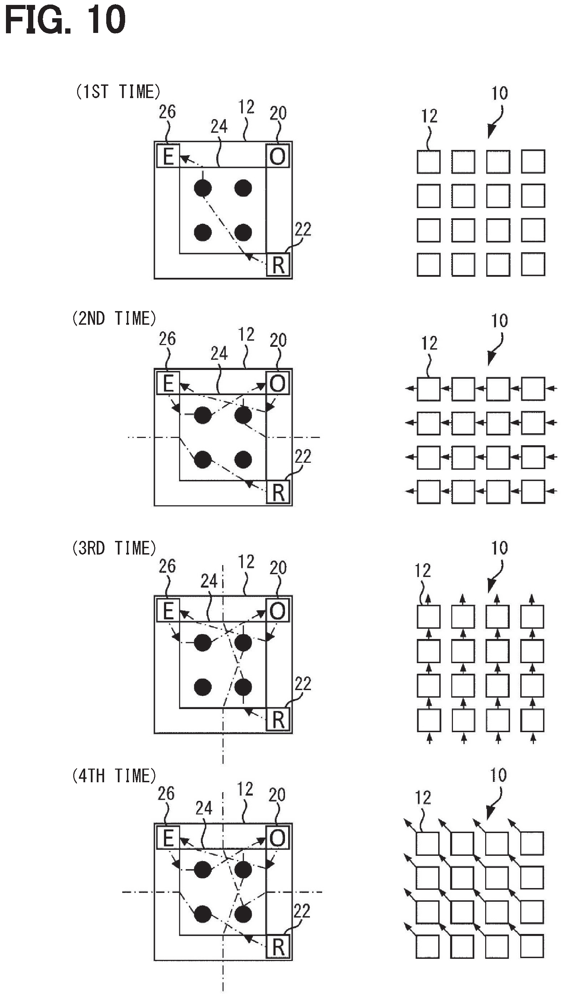

FIG. 10 is a schematic diagram showing data movement when the arithmetic device 10 of the present embodiment performs a convolution operation. In the example of FIG. 10, a 2×2 convolution operation is divided into four times of processing and repeated. In FIG. 10, the diagram on the left side of each time shows data movement in one PE 12, and the diagram on the right side of each time shows data movement in multiple PEs 12 included in the arithmetic device 10 with arrows.

In the first processing, data is stored (copied) from the register 22 of own PE 12 to the save register 26. This data is multiplied by weights in advance for the convolution operation.

In the second processing, the PE 12 moves the data held in the register 22 of own PE to the adjacent PE 12 on the left side. Therefore, data is transferred from the right side PE 12 toward left side, and the arithmetic circuit 20 of each PE adds up the data transferred from right side PE to the data held in the save register 26 of own PE. The result of addition operation is held in the save register 26.

In the third processing, the PE 12 moves the data held in the register 22 of own PE to the upper PE 12. As a result, data is transferred to the upper PE 12 from the lower PE 12, and the arithmetic circuit 20 adds up the transferred data to the data held in the save register 26, and the addition result is held in the save register 26.

In the fourth processing, the PE 12 moves the data held in the register 22 of own PE 12 to the PE 12 on the upper left side. Therefore, data is transferred from the PE 12 on the lower right side to the PE 12 on the upper left side, and the arithmetic circuit 20 adds up the transferred data to the data held in the save register 26 of own PE, and the addition result is held in the save register 26.

The arithmetic device 10 may perform convolution operation with fewer iterations or may be able to calculate a larger kernel size by multiplexing the wirings 14 between the PEs 12.

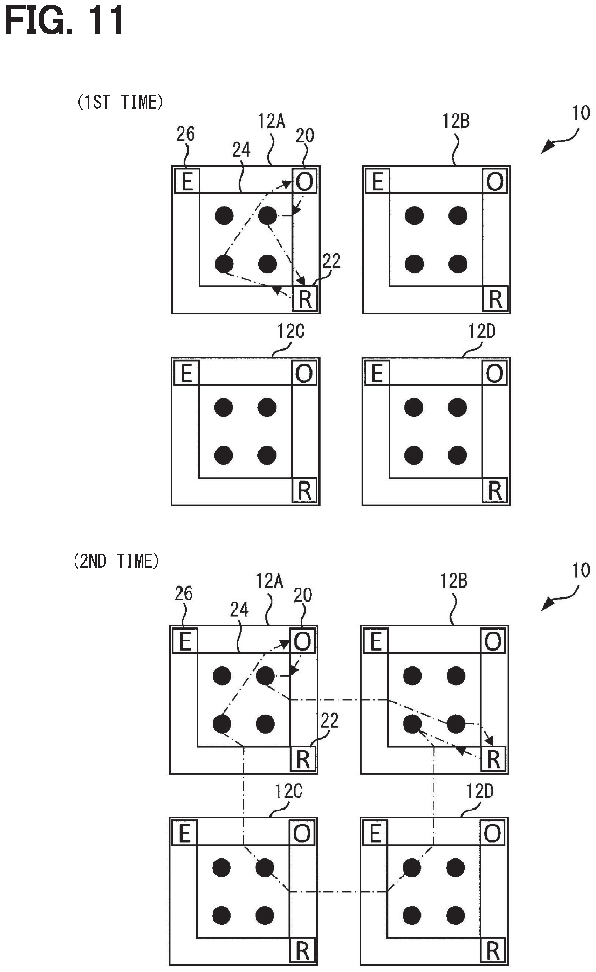

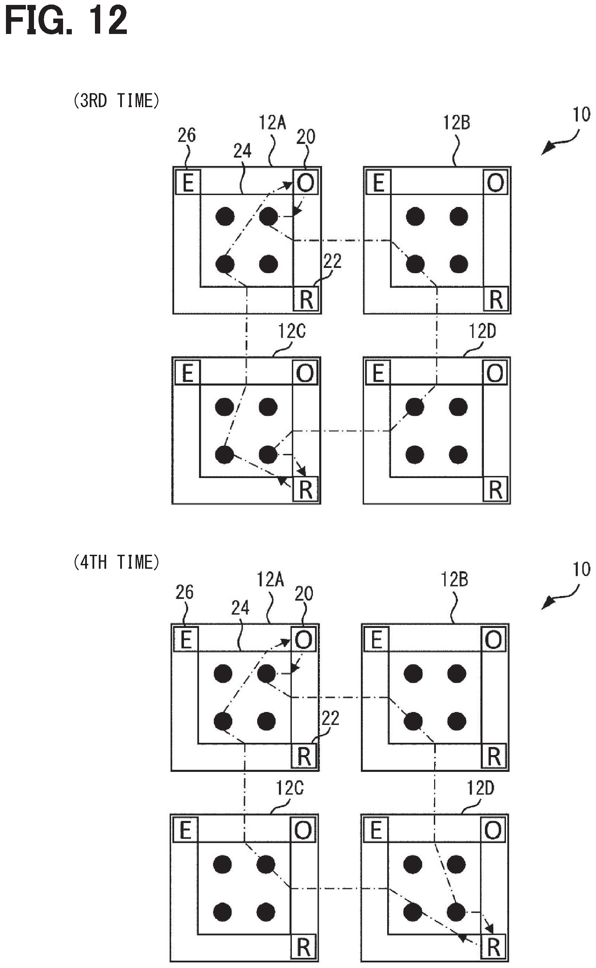

The following will describe data movement in a case where the arithmetic device 10 of the present embodiment includes arithmetic circuits 20 that perform specific processing in partial PEs 12 with reference to FIG. 11 and FIG. 12. When the specific processing is to be performed, data is moved to partial of the PEs 12 via the selector 24. Providing the specific arithmetic circuits 20 only in partial PEs 12 means that, for example, arithmetic circuits 20 that are used relatively infrequently, such as exp, log, sin, asin, and floating-point calculations, are not provided in all PEs 12, but are provided, for example, in every other row or column.

The specific arithmetic circuits 20 may be provided in a distributed manner in the PEs 12. For example, to prevent imbalance in the circuit scale of the PEs 12, only the PEs 12 in odd-numbered rows and even-numbered columns have the log arithmetic circuits 20, and only the PEs 12 in even-numbered rows and odd-numbered columns have the sin arithmetic circuits 20.

FIG. 11 and FIG. 12 each shows an example in which only the PEs 12A in the odd-numbered rows and odd-numbered columns have the arithmetic circuits 20 for exp operation, and the PEs 12A perform the exp operation on the data held in the registers 22 of the PEs 12A to 12D.

In the first processing, the PE 12A performs the arithmetic processing of exp on the data held in own register 22, and holds the result of the arithmetic processing in the register 22.

In the second processing, the PE 12B moves data to the PE 12A via the PE 12D and PE 12C. The PE 12A performs the arithmetic processing of exp on the data moved from the PE 12B, transfers the arithmetic processing result to the PE 12B, and the PE 12B stores the arithmetic processing result in the register 22.

In the third processing, the PE 12C moves the data to the PE 12A. The PE 12A performs the arithmetic processing of exp on the data moved from the PE 12C, and transfers the processing result to the PE 12C via the PEs 12B and 12D. The PE 12C stores the processing result in the register 22.

In the fourth processing, the PE 12D moves data to the PE 12A via the PE 12C. The PE 12A performs the arithmetic processing of exp on the data moved from the PE 12D, and transfers the processing result to the PE 12D via the PE 12B. The PE 12D stores the processing result in the register 22.

### (Row-by-row processing)

The arithmetic device 10 of the present embodiment may allocate multiple arithmetic processing to respective rows and process multiple rows at once. For example, the first row is assigned to mul operation, the second row is assigned to add operation, the third row is assigned to rshift operation, and the fourth row is assigned to clip operation.

The arithmetic device 10 of the present embodiment may read (input) data and write (output) data simultaneously with the arithmetic processing, so that the arithmetic circuit 20 may perform processing similar to a pipeline.

For example, in the first processing, the PE 12 in the first row reads data 1 from the external memory 30. In the second processing, the PE 12 in the first row reads data 2 from the external memory 30, while processing data 1 using the arithmetic circuits 20 of the PEs 12 in the first to fourth rows, and finally storing the data 1 in the register 22 of PE 12 in the fourth row. In the third processing, the PE 12 in the first row reads data 3 from the external memory 30, while processing data 2 using the arithmetic circuits 20 of the PEs 12 in the first to fourth rows, and finally stores the data 2 in the register 22 of PE in fourth row. At this time, the PE 12 in the fourth row outputs the processing result of data 1 that has been stored to the external memory 30.

The arithmetic device 10 repeats this series of process in a pipeline processing corresponding to the required data. With this configuration, within a readout period of the data from the external memory 30, the arithmetic processing on the data together with the writing of arithmetic processing results to the external memory 30 can be completed.

Instead of acquiring data from the external memory 30, the PE 12 may acquire the data from the register 22 of another PE 12 that holds data, which has already been processed. The processed data may be output to the register 22 of PE 12, which does not have the arithmetic circuit 20, instead of outputting to the external memory 30. This configuration can reduce the time required for data input and data output when different processes are executed consecutively. In this case, the data capacity that can be held by the registers 22 of PEs 12 in the first and last rows may be increased. When the arithmetic processing is performed in the column direction, the data capacity that can be held by the registers 22 of the PEs 12 in the first or last column may be increased.

In the above configuration, data storage units may be provided outside the first row, outside the last row, outside the first column, and outside the last column. Thus, data may be input from the data storage unit to the PE 12 or output from the PE 12 to the data storage unit.

Suppose that the number of rows to be processed is small. In this case, the PEs 12 every several rows may be provided with larger capacity registers 22 such that data may be transferred from the PEs 12 provided with larger capacity registers to the external memory 30.

When the number of rows of PEs 12 provided in the arithmetic device 10 is insufficient and the processing to be executed needs to be performed in multiple times of processing, the result of first arithmetic processing performed by the PEs 12 from the first row to the last row may be stored in the registers 22 of PEs 12 in the last row. In the second arithmetic processing, the result of the arithmetic processing from the last row to the first row may be stored in the registers 22 of PEs 12 in the first row, and such processing may be repeated.

When the arithmetic processing is performed by the PEs 12 in a different column, the arithmetic processing may be performed while moving data from the PEs 12 in the different column.

The processed data in the last row may not be stored in the save registers 26 of the last row, but may be moved to the registers 22 of PEs in the upper row and used in the next pipeline process. This eliminates the need to provide multiple save registers 26 in the last row, and allows the next process to be started continuously from the row located upper side on the last row. Similarly, the data may not be saved in the save registers 26 or registers 22 of the PEs 12 that have completed the arithmetic processing, but may be saved in empty save registers 26 or registers 22 of other PEs 12.

### (Configuration of arithmetic device having thinned-out PE connecting wiring)

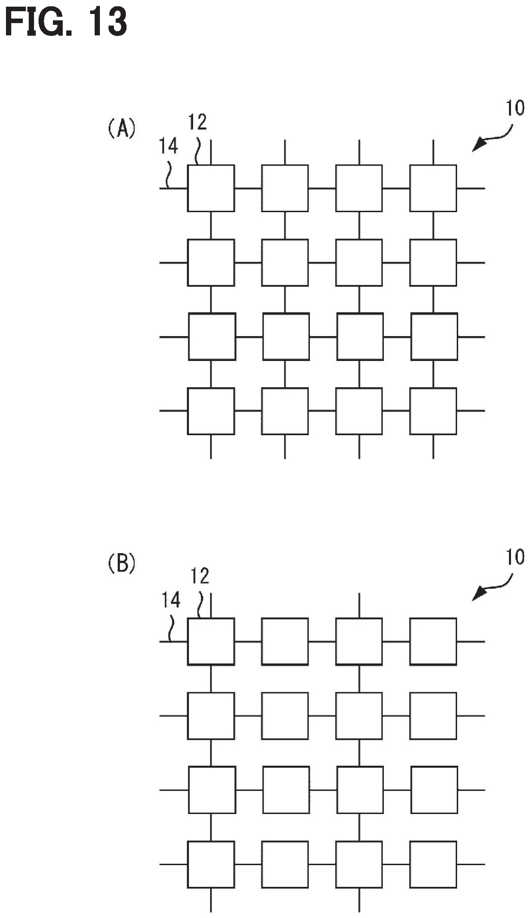

In the arithmetic device 10 of the present embodiment, the wiring 14 used for data movement between the PEs 12 may be provided for each PE 12 located at a predetermined interval. FIG. 13 is a schematic diagram showing the configuration of wiring 14 of the PEs 12. FIG. 13 shows, in (A), a normal configuration in which the wiring 14 is provided between all adjacent PEs 12, and shows, in (B), a configuration in which some of the wiring 14 is thinned out.

In the example of (B) of FIG. 13, the wiring 14 connecting the PEs 12 in the column direction is provided for every other PE 12. That is, in (B) of FIG. 13, the wiring 14 in the column direction is half of the normal configuration of wiring. The wiring 14 may also be thinned out in the row direction.

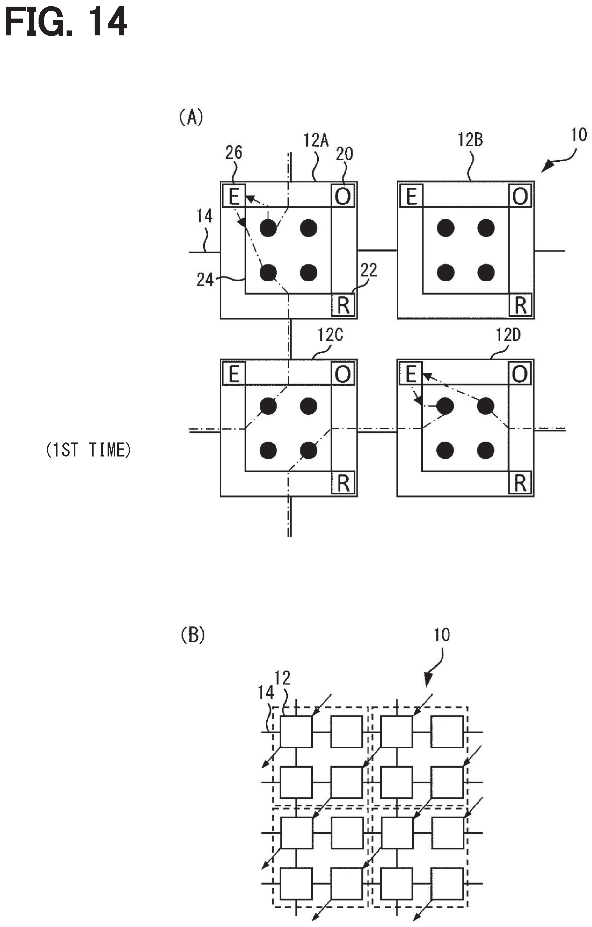

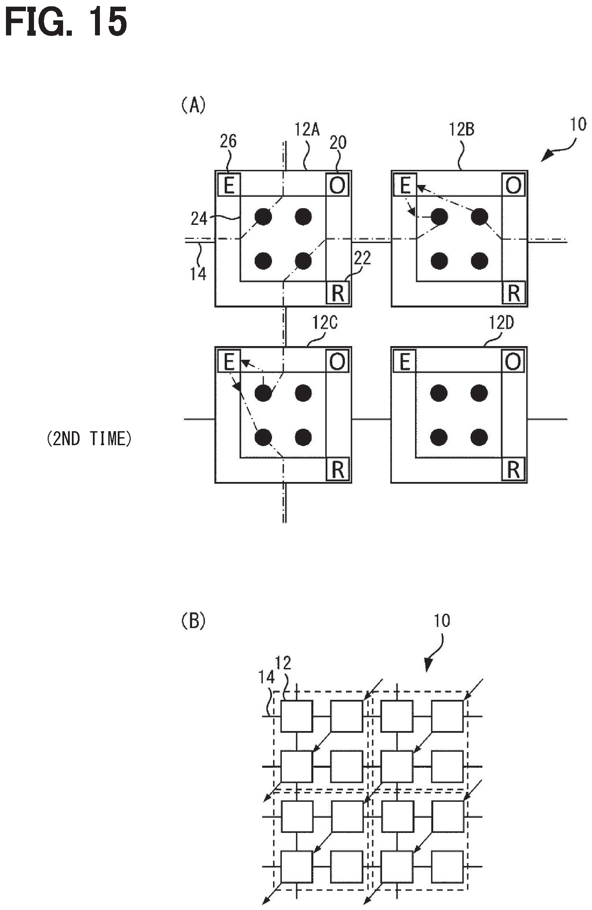

The following will describe a diagonal data movement in a configuration where the wiring 14 is thinned out with reference to FIG. 14 and FIG. 15.

FIG. 14 shows the first processing of diagonal data movement in the configuration where the wiring 14 is thinned out, and FIG. 15 shows the second processing of diagonal data movement in the configuration where the wiring 14 is thinned out. In (A) of FIG. 14 and (A) of FIG. 15, data movement among four adjacent PEs 12 is shown. In (B) of FIG. 14 and (B) of FIG. 15, the positions of four adjacent PEs 12 in the arithmetic device 10 are shown by dashed lines. As shown in FIG. 14 and FIG. 15, in the configuration where the wiring 14 is thinned out, the selectors 24 may be set such that four adjacent PEs 12 is defined as a group, and data movement is performed in two steps.

The thinning out of wiring 14 may be used in a multidimensional array in which the PEs 12 are arranged in three, four or more dimensions.

In a multidimensional array, the PEs 12 are represented by a multidimensional coordinate system that includes two dimensions indicating the up, down, left, and right directions (row and column directions, XY directions) as well as other directions (ZW direction). In a multidimensional array, the PEs 12 are capable of inputting and outputting data between adjacent PEs 12 in the XY direction, and are also capable of inputting and outputting data between adjacent PEs 12 in other dimensions such as the ZW direction. Such a configuration of the arithmetic device 10 makes it possible to reduce the number of wirings 14 between the PEs 12 required for data movement.

When the PEs 12 are arranged in three or more dimensions, each PE 12 is connected to other PEs 12 in the XY direction and the ZW direction by the wiring 14. However, data movement between PEs 12 in the ZW direction occurs less frequently than data movement between PEs 12 in the XY direction. Therefore, as described above, the circuit configuration may be simplified by thinning out some part of the wiring 14 in the ZW direction that has a lower use frequency than that of the XY direction.

### (Sorting process)

The following will describe a sorting process for sorting values held in the registers 22 of multiple PEs 12 into ascending or descending order. The sorting process repeatedly determines a magnitude of score data indicating the data size held in the register 22 of each of the two PEs 12 using the arithmetic circuit 20 of one of the two PEs 12, and moves data according to the magnitude relationship of the score data. For this purpose, the arithmetic circuit 20 functions as an exchange circuit that changes the PE 12 in which the score data to be stored depending on the magnitude relationship of the score data.

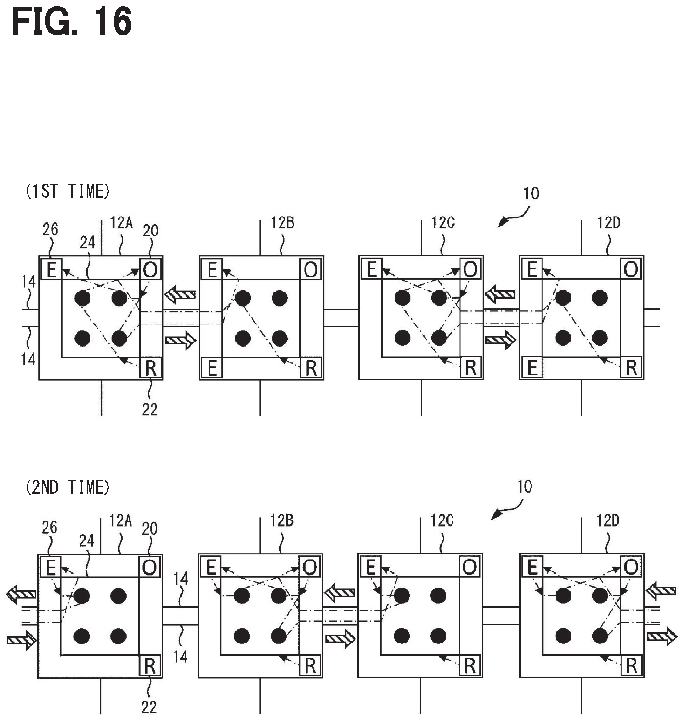

FIG. 16 is a schematic diagram showing the movement of score data when sorting is performed in the arithmetic device 10 of the present embodiment. In the present embodiment, the PEs 12 in the row direction are connected by two wirings 14. Thus, in a single operation, it is possible to input and output score data from one PE 12 to another PE 12, determine the magnitude of score data, and move data according to the magnitude relationship of score data.

As shown in FIG. 16, in the first processing, a score data exchange process is performed between the two adjacent PE 12A and PE 12B. Specifically, the score data held in the register 22 of PE 12B is input to the arithmetic circuit 20 of PE 12A via the selector 24, and the score data held in the register 22 of PE 12A is input to the arithmetic circuit 20 of PE 12A. The arithmetic circuit 20 of the PE 12A determines which of the two input score data is larger. Then, the score data having the smaller value is stored in the save register 26 of the PE 12A, and the score data having the larger value is stored in the save register 26 of the PE 12B.

Similarly, the arithmetic circuit 20 of PE 12C determines whether the score data held in PE 12C is larger or smaller than the score data held in the PE 12D. Then, the score data having the smaller value is held in the save register 26 of PE 12C, and the score data having the larger value is held in the save register 26 of PE 12D.

In the second processing, the score data is exchanged between two adjacent PEs 12 in a direction different from the direction in the first processing. In the example of FIG. 16, the arithmetic circuit 20 of PE 12B determines whether the score data held in PE 12B is larger or smaller than the score data held in PE 12C. Then, the score data having the smaller value is held in the save register 26 of PE 12B, and the score data having the larger value is held in the save register 26 of PE 12C. The score data exchange process is also performed between the PE 12A and the PE 12 adjacent to the PE 12A on the left side. The score data exchange process is also performed between the PE 12D and the PE 12 adjacent to the PE 12D on the right side.

By repeating the first and second processing, the sorting of score data held in the arithmetic device 10 can be performed.

When the arithmetic device 10 of the present embodiment performs the sorting process on the score data held in multiple PEs 12, the arithmetic device 10 determines the magnitude of score data moved between one PE 12 and the adjacent PE 12 via the selector 24, and performs the exchange process that moves the score data to another PE 12 depending on the determination result of magnitude. Then, the exchange process is repeated for different combinations of two adjacent PEs 12. The arithmetic circuit 20 that determines the magnitude of score data may use the arithmetic circuit of PE 12B or PE 12D for the first and second time processing. Thus, the arithmetic circuit 20 for determining the magnitude of score data may be thinned out.

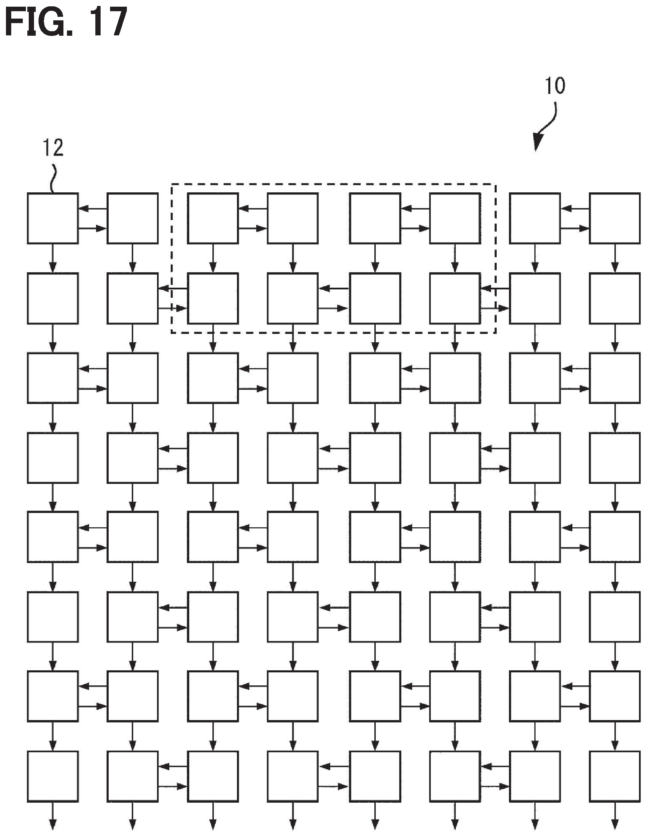

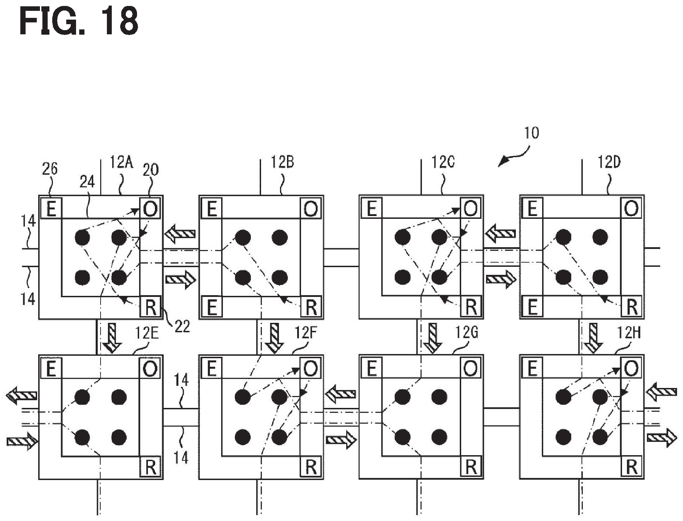

The following will describe, with reference to FIG. 17 and 18, a case where the number of score data to be sorted is equal to or less than the number of PEs 12 arranged in one row. In the example of FIG. 17 and 18, the number of PEs 12 arranged in one row is eight, and eight score data are to be sorted. That is, each PE 12 in the first row holds one score data item. In such a case, sorting can be performed in a single operation. FIG. 17 is an overall diagram of the PEs 12 that constitute the arithmetic device 10. FIG. 18 shows data movement in the eight PEs 12 within the area enclosed by the dashed line in FIG. 17.

As shown in FIG. 17, each PE 12 in the first row performs magnitude determination of score data with the adjacent PE 12, and performs the exchange process of moving the score data to the PE 12 in the second row depending on the result of the magnitude determination. As shown in FIG. 18, PE 12A and PE 12B each determines which of the two score data is larger. Depending on the determination result of score data magnitude, the score data having the smaller value is moved from the PE 12A to the PE 12E in the second row adjacent in the column direction. The score data having the larger value is transferred from the PE 12A to the PE 12F, which is arranged in the second row and adjacent to the PE 12B in the column direction, via the selector 24 of the PE 12B.

The PE 12C and the PE 12D each determines which of the two score data is larger. Depending on the determination result of score data magnitude, the score data having the smaller value is moved from the PE 12C to the PE 12G in the second row adjacent in the column direction. The score data moved to the PE 12G is moved to the PE 12F via the selector 24. The score data having the large value is transferred from the PE 12C to the PE 12H, which is arranged in the second row and adjacent to the PE 12D in the column direction, via the selector 24 of the PE 12D.

The PE 12F determines which of the two input score data is larger. Depending on the determination result of score data magnitude, the PE 12F moves the score data having the smaller value to the PE 12 in the third row adjacent to the PE 12F in the column direction, and moves the score data having the larger value to the PE 12, which is arranged in the third row adjacent to the PE 12G in the column direction, via the selector 24 of PE 12G.

The score data moved to PE 12E and PE 12H undergoes a magnitude comparison with the score data of other PEs 12 adjacent in the row direction, and is moved to the PEs 12 in the third row adjacent in the column direction. Then, the same exchange process as in the first and second row is carried out for the third and subsequent lines. Then, the score data is output from the final matrix in ascending or descending order. The score data is output to, for example, the external memory 30.

The following will describe a difference between the process described with reference to FIG. 17 and FIG. 18 and the repeated process described with reference to FIG. 16. In FIG. 16, each time the exchange process of score data is performed between two adjacent PEs 12, the score data is temporarily stored in the save register 26. In the process of FIG. 17 and FIG. 18, the score data that has undergone the exchange process is not stored in the save register 26. That is, in the process of FIG. 17 and FIG. 18, instead of storing the score data in the save register 26 each time the exchange process is performed, the score data is moved to the PE 12 in the lower row, and the exchange process is repeatedly performed by two adjacent PEs 12 in the row direction toward the lower row.

In the process of FIG. 17 and FIG. 18, the score data is not stored in the save register 26 or the register 22 during the sorting process, so that the sorting is completed in a single operation.

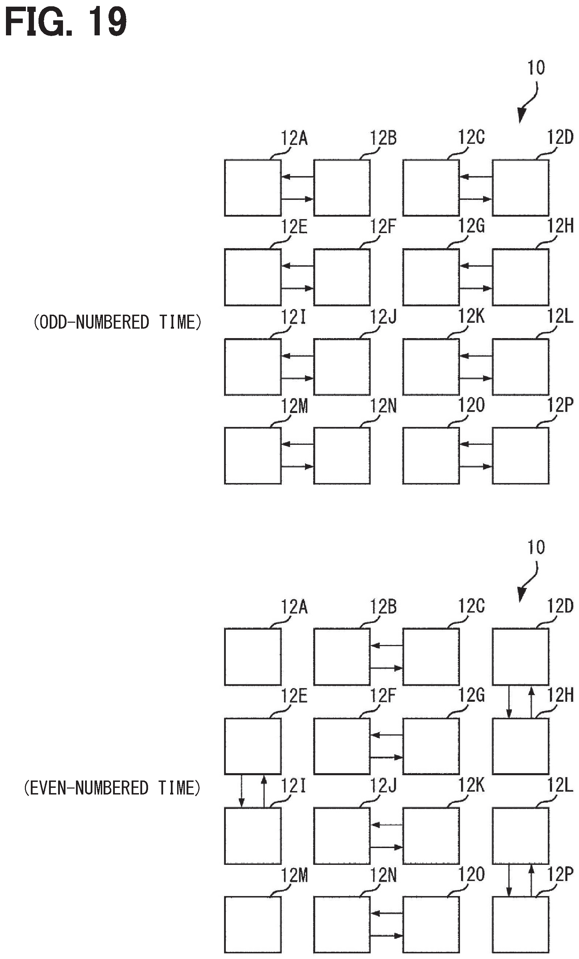

The following will describe data movement when sorting of multiple score data items for multiple rows in the arithmetic device 10 with reference to FIG. 19. This example is a case where the number of score data items to be sorted is greater than the number of PEs 12 in one row.

In the example of FIG. 19, the arithmetic device 10 has a total of 16 PEs 12A to 12P arranged in four rows and four columns. Each of the 16 PEs 12 holds score data. That is, FIG. 19 illustrates an example in which 16 score data items are sorted using the PEs 12 arranged in four rows and four columns.

In the first (odd-numbered) processing, the score data items of two adjacent PEs 12 are exchanged. That is, in the first row, the score data exchange process is performed between the PE 12A and the PE 12B, and the score data exchange process is performed between the PE 12C and the PE 12D. The same applies to rows 2 to 4.

In the second (even-numbered) processing, the score data exchange process is performed between PE 12B and PE 12C in the same row, but the PE 12 at the end of each row exchanges the score data with the PE 12 adjacent in the column direction. In the example of FIG. 19, the score data exchange process is performed between PE 12D and PE 12H, the score data exchange process is performed between PE 12E and PE 12I, and the score data exchange process is performed between PE 12L and PE 12P. Then, even-numbered exchange processing and odd-numbered exchange processing are repeated until the sorting is completed.

When sorting the score data for multiple rows of the arithmetic device 10 in the above-described manner, the PE 12 at the end of each row and the PE 12 at the end of the lower row are considered to be virtually adjacent in the row direction. The PE 12 at the front end of the second row and the PE 12 at the front end of the lower row are considered to be virtually adjacent in the row direction. That is, the score data is sorted by virtually considering the PEs 12, which are physically arranged in multiple rows, as arranged in one row. In the example of FIG. 19, the PEs 12A, 12B, 12C, 12D, 12H, 12G, 12F, 12E, 12I, 12J, 12K, 12L, 12P, 12O, 12N, and 12M arranged in this order is considered as one row. Thus, it is possible to sort the score data even though the PEs are arranged in multiple rows.

As shown in FIG. 19, the PE 12 at the end in the row direction is connected to the PE 12 adjacent in the column direction by two wirings 14.

When there are more score data than the number of PEs 12, for example 64 score data, as described above, each of 16 PEs 12, which are virtually considered to be arranged in one row, will hold four score data. In each PE, the four score data are distinguished by assigning identification numbers, such as "1", "2", "3", and "4". Then, the odd-numbered exchange processing shown in FIG. 19 is performed four times for the score data item with the same identification number among the four score data items held in PE 12, and then the even-numbered exchange processing shown in FIG. 19 is performed four times for the score data item with the same identification number among the four score data items held in PE 12.

The PE 12A and the PE 12M at the ends of the PEs 12 considered as one row need to exchange score data within own PEs 12 in even-numbered processing. In the example of 64 score data, the PE 12M performs the exchange process between the score data with identification number of "1" and the score data with identification number of "2" in own PE 12M, PE 12A performs the exchange process between the score data with identification number of "2" and the score data with identification number of "3" in own PE 12A, and PE 12M performs the exchange process between the score data with identification number "3" and the score data with identification number of "4" in own PE 12M. Thus, it is possible to sort score data even when the number of score data items is greater than the number of PEs 12.

When the exchange process is performed between two adjacent PEs 12, movement destination data indicating the movement destination of score data to be transferred in the score data exchange process may be recorded, and other data may be transferred in the same order as the score data based on the movement destination data. The other data may be associated with the score data.

The movement destination data indicates the movement of score data as a result of exchange process, which is determined to be executed according to the result of magnitude determination of score data. The movement destination data is stored for the location where the score data exchange process is performed and the number of times the score data exchange process is executed. However, depending on the score data, there may be a case where the exchange is not performed although the execution number of exchange process increases, and in such a case, the exchange process may be terminated midway.

As described above, when the PEs 12 of the arithmetic device 10 are arranged not in two-dimensional manner but in three-dimensional manner or four-dimensional manner, the PEs 12 located at the ends of the three or four dimensions may be virtually regarded as adjacent in the row direction as described above. The sorting process may be performed with fewer execution number.

### (Sorting by index order)

In sorting of multiple data items, in addition to sorting in ascending or descending order by determining the magnitude relationship of score data, the data may also be sorted in a predetermined order.

Specifically, when index data indicating the order of data is associated with each data item, the data items held in respective PEs 12 are sorted based on the order indicated by the index data. In the following description, data associated with the index data will be referred to as input data in order to distinguish the data itself from the index data associated with the data. The index data indicates the order in which the data is arranged, and is therefore represented by consecutive numbers such as "0", "1", "2", or the like. Therefore, there is no PEs 12 to which the same index data are assigned.

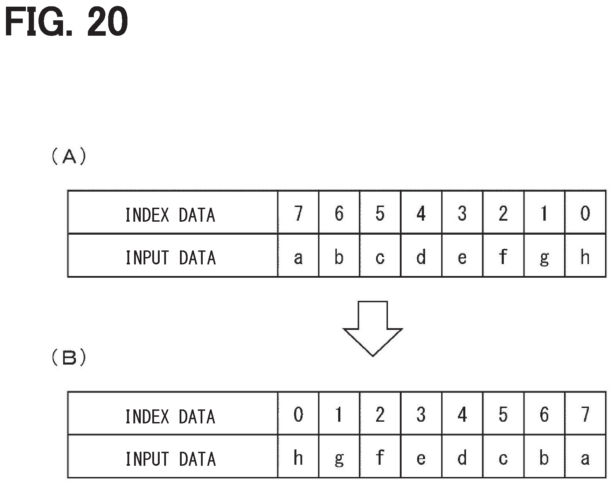

FIG. 20 shows input data associated with index data before and after sorting. In the example of FIG. 20, as shown in (A), input data "a" to "h" are input to each PE 12 of the arithmetic device 10 in the order of "a" to "h", and each of the input data "a" to "h" is associated with predetermined index data "7" to "0". The result of sorting the input data in the order of index data "0" to "7" is shown in (B) of FIG. 20.

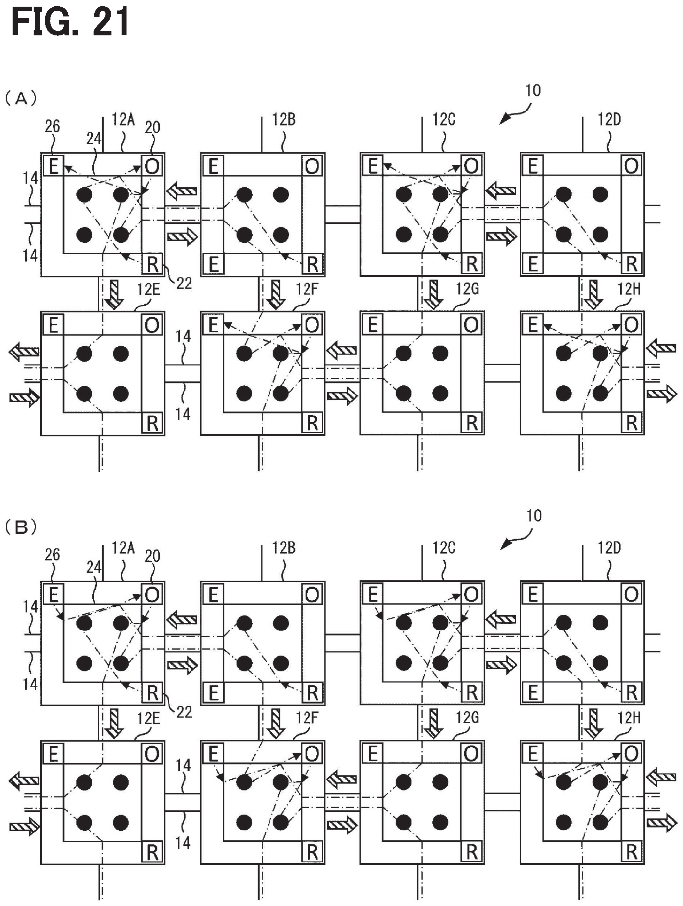

The following will describe data movement between PEs 12 with reference to FIG. 21. The data movement between PEs 12 shown in FIG. 21 is basically the same as the exchange process shown in FIG. 17 and FIG. 18, except that the concept of index data is added. The input data associated with the index data is held in the register 22 of each PE 12.

FIG. 21 shows the first or odd-numbered processing in (A). The PE 12 exchanges index data with the adjacent PE 12 based on the order indicated by the index data, and holds movement destination data indicating the destination of index data between the adjacent PE 12.

For example, the arithmetic circuit 20 of PE 12A determines whether the index data of PE 12A is larger than the index data of PE 12B. Depending on the determination result, the index data with the smaller value is moved from PE 12A to PE 12E in the second row adjacent in the column direction. The index data with a larger value is moved from the PE 12A to the PE 12F in the second row adjacent to the PE 12B in the column direction via the selector 24 of the PE 12B. At this time, the arithmetic circuit 20 of the PE 12A generates movement destination data and stores the movement destination data in the save register 26. Similarly, in the PEs 12C and 12D, the index data is exchanged between the two adjacent PEs 12, and the movement destination data is held in the save register 26. Then, the second and subsequent rows are processed in the same manner as the first row, enabling multiple rows are processed in a single operation.

FIG. 21 shows the second or even-numbered processing in (B). The PE 12 moves input data between adjacent PE 12 based on the movement destination data of index data. That is, in even-numbered processing, the magnitude relationship between the two input data items is not determined, and the input data is moved based on the movement destination data indicating the movement destination of index data.

For example, the arithmetic circuit 20 of the PE 12A reads the movement destination data from the save register 26 of the PE 12A, and moves the input data of the PE 12A and the input data of the PE 12B based on the readout movement destination data. That is, the input data of the PE 12A and the input data of the PE 12B are moved to the PE 12E or the PE 12F in the same manner as the movement of index data indicated by the movement destination data. The processing is performed in other PEs 12 in the same manner. Then, the second and subsequent rows are processed in the same manner as the first row, enabling multiple rows are processed in a single operation.

As a result, as shown in FIG. 20, the input data associated with the index data are sorted in the order indicated by the index data. When multiple input data items associated with respective index data items are newly input to the arithmetic device 10 and the input order is the same as the previous time, the input data items may be sorted by using the movement destination data generated in previous time sorting. That is, in this case, the process in (B) of FIG. 21 is carried out instead of the process in (A) of FIG. 21.

In this way, when the input data to PE 12 is associated with index data indicating the order of input data, PE 12 determines the magnitude of the index data, which is moved between own PE and another adjacent PE 12 via the selector 24. Then, the PE 12 moves the index data to another PE 12 depending on the determination result of magnitude of index data, and holds the movement destination data indicating the movement destination of the index data. Then, the PE 12 moves the input data between own PE and another adjacent PE 12 based on the movement destination data.

As described above, when the arithmetic device 10 receives input data, which is associated with index data and transmitted from the external memory 30 to the PE 12, the PE 12 moves the input data between own PE and another adjacent PE 12 based on the movement destination data.

### (Data replacement by selector setting)

In a predetermined process such as a transposition process that replaces row data and column data, the operation of the selector 24 may be set in advance so that data moves from one PE 12 to another PE 12.

When the distance over which data is required to be moved between PEs 12 is long, the data movement may be performed by burst-transferring of multiple data items from one or more PEs 12 to one or more PEs 12.

### (Sorting of relative addresses to move data to relative address)

The arithmetic device 10 may read data from the external memory 30 to the relative address location by sorting the relative addresses.

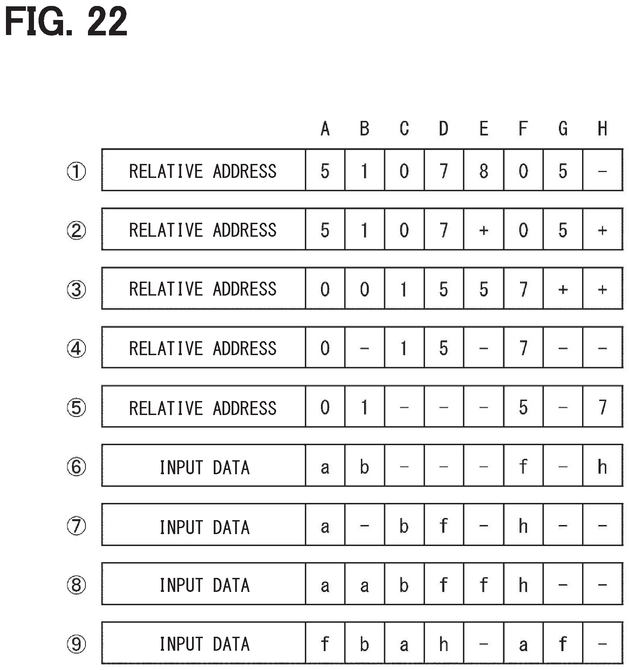

FIG. 22 is a schematic diagram showing relative addresses and input data rearranged by the sorting process of the arithmetic device 10 when moving data to the relative address. In FIG. 22, the numbers in circles on the left side indicate the processing order. Suppose the number of PEs 12 in the row direction is eight. That is, in the first processing, a relative address is input to each PE 12 arranged in the row direction. Suppose that the addresses are PEs 12A, PE 12B, 12C, 12D, 12E, 12F, 12G, and PE 12H from the left end in the row direction. A relative address of "5" is input to PE 12A, a relative address of "1" is input to PE 12B, a relative address of "0" is input to PE 12C, a relative address of "7" is input to PE 12D, a relative address of "8" is input to PE 12E, a relative address of "0" is input to PE 12F, a relative address of "5" is input to PE 12G, and no relative address is input to PE 12H, which is set to "-".

In this way, to some PEs 12 in the row direction, same relative address as other PEs 12 are input. Some PE has no input of relative address. Some PE has input of relative address, but the relative address is not within the range of input data.

In the example of FIG. 22, the relative address "8" is the ninth relative address, and is not processed at the same time as the relative address of "0" to "7". That is, the relative address of "8" is a relative address outside the range of input data. Therefore, in the second processing, the relative address "8" is converted to "+". Note that "-" input to the PE 12G is also outside the range of input data, and is converted to "+".

In the third processing, the relative addresses are sorted in ascending order from the left end. Note that "+" indicating outside the input range is considered to be the largest value and is moved to the right. The data movement information indicating this sorting is stored in the save register 26 of the PE 12 as movement destination data 1.

In the fourth processing, when the relative address is the same as the value on the left side, the relative address is converted to "-". This process also converts "+" to "-". The conversion information from "+" to "-" is held in the save register 26 as movement destination data 2.

In the fifth processing, the relative addresses equal to or greater than "0" are moved to the PE 12 corresponding to the same value in the column. That is, PE 12A in the first column corresponds to "0", PE 12B is in the second column corresponds to "1", and similarly PE 12H in the eighth column corresponds to "7". Therefore, the relative address "0" is moved to the PE 12A, the relative address "1" is moved to the PE 12B, the relative address "5" is moved to the PE 12F, and the relative address "7" is moved to the PE 12G. The data movement information for the fifth processing is held in the save register 26 of the PE 12 as movement destination data 3.

In this way, by the first to fifth processing, the relative addresses are sorted in ascending order for the PEs 12A to 12H.

In the sixth processing, the input data is read from the external memory 30 and input to the PEs 12A to 12H in order, and is held in each PE 12. That is, the input data is input from the external memory 30 to the PE 12 so as to correspond to the relative addresses in ascending order. Then, the input data is associated with the relative address held in each PE 12. In the present embodiment, the input data is read from the external memory 30. Alternatively, the input data may be stored in each PE 12 in advance. In the sixth processing, the input data items are associated with the relative addresses sorted in ascending order in the first to fifth processing.

In the seventh processing, the movement destination data 3 is used to perform an inverse transformation, so that the row order of the input data held in each PE 12 is made the same as the order of the relative addresses in the fifth processing.

In the eighth processing, the movement destination data 2 is used to perform an inverse conversion, thereby making the input data held in each PE 12 correspond to the relative address in the fourth processing.

In the ninth processing, the input data held in each PE 12 is made to correspond to the relative addresses in the third processing by performing an inverse conversion using the movement destination data 1.

In this way, in the sixth to ninth processing, the input data items held by the PEs 12 are moved and converted by the reverse order and reverse conversion in which the relative addresses are moved. As a result, the input data items held in the PEs 12 in the sixth processing are held in the PEs 12 at the original relative address position (the relative address position at the time of the first processing).

In this manner, when the relative address is associated with the PE 12 in the present embodiment, each PE 12 determines a magnitude of relative address to be moved between own PE and another adjacent PE 12 via the selector 24, and moves the relative address to another PE 12 according to the result of magnitude determination, while holding the movement destination data indicating the movement destination of the relative address. After the input data is associated with the relative address after the movement, the PE 12 moves the input data between own PE and another adjacent PE 12 in the reverse order of the movement indicated by the movement destination data.

As described above, when the arithmetic device 10 receives input data, which is associated with the relative address and is transferred from the external memory 30 to the PE 12, the PE 12 moves the input data between own PE and another adjacent PE 12 based on the movement destination data.

In the example of FIG. 22, the processing is performed on relative addresses from "0" to "7", so the arithmetic device 10 performs the same processing on relative addresses from "8" onwards while limiting the range to "8" to "15", "16" to "23", in similar manner. When the values and order of the relative addresses input to the arithmetic device 10 are known in advance, movement destination data may be prepared in advance, and only the inverse conversion may be performed when performing the processing shown in FIG. 22.

### (Sorting of two-dimensional index data)

In the present embodiment, one-dimensional index data for each PE 12 included in the arithmetic device 10 is used as position information, and two-dimensional index data is specified for each PE 12 based on the one-dimensional index data.

For example, two-dimensional index data is designated for each PE 12 by consecutive numbers, such as 0, 1, 2... from the left column indicate by x, and 0, 1, 2... from the upper row indicated by y. When the number of columns of the two-dimensionally arranged PEs 12 is 8 and the one-dimensional index data is a, the two-dimensional index data (x, y) will be (the remainder when a is divided by 8, the quotient when a is divided by 8). That is, when the one-dimensional index data is 21, the two-dimensional index data (x, y) becomes (5, 2). In this way, the multiple PEs 12 assigned with two-dimensional index data are virtually divided into multiple groups, and data is sorted in the multiple PEs 12 for each group.

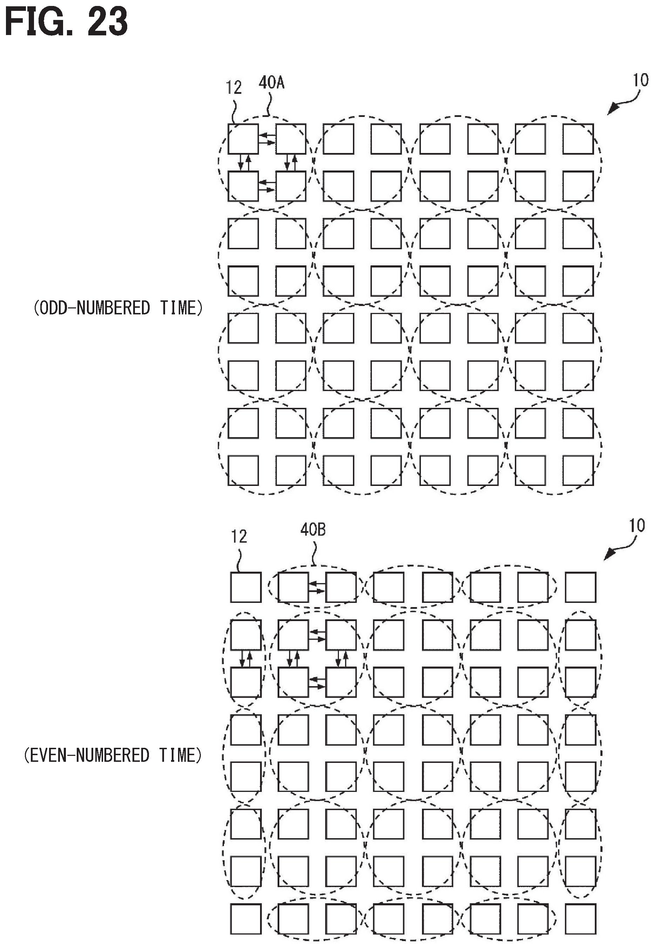

The sorting process performed for each group will be described below with reference to FIG. 23. In the example of FIG. 23, data is moved among four grouped PEs 12 in a single operation by performing the sorting process. If necessary, the wiring 14 between the PEs 12 may be multiplexed or each PE 12 may be equipped with multiple arithmetic circuits 20.

In the first (odd-numbered) processing, the multiple PEs 12 are virtually divided into multiple first groups 40A each consisting of three or more adjacent PEs 12. For example, in the example of FIG. 23, four PEs 12 arranged in two rows and two columns are grouped into one first group 40A.

In the first sorting process, a magnitude determination is performed on the multiple index data items for each first group 40A, and the index data items, and the input data items associated with the index data items are moved according to the magnitude determination result of index data items. The sorting of data in the multiple PEs 12 included in one group is similar to the above-described sorting process implemented by the exchange process. For example, in FIG. 23, in the row-direction exchange process, data with smaller value in the column position of the two-dimensional index data is moved to the PE 12 on the left side. In the column-direction exchange process, data with smaller value in the row position of the two-dimensional index data is moved to the PE 12 on the upper side.

In the second (even-numbered) process after the first sorting process, multiple second groups 40B are virtually divided to be different from the first groups 40A, and each second group includes three or more PEs 12. In the example of FIG. 23, PEs 12 located at the corners of the array do not form a group. The PEs 12 located at the ends in the row direction configure the second group 40B with two PEs 12 positioned on the left and right sides, and the PEs 12 located at the ends in the column direction configure the second group 40B with two PEs 12 positioned on the top and bottom sides. For the internal PEs 12, four PEs 12 arranged in two rows and two columns configure the second group 40B.

Then, in the even-numbered process, the second sorting process is performed in which a magnitude determination is made on multiple index data items for respective PEs in each second group 40B, and the index data items and input data items associated with the index data items are moved according to the magnitude determination result. The arithmetic device 10 repeats the first sorting process and the second sorting process as many times as necessary. In the example of FIG. 23, sorting is completed after eight repetitions, which is the square root of the number of data items.

This method of sorting data among multiple PEs 12 for each group can be applied not only to a two-dimensional arrangement of PEs 12 in the row and column directions (x and y directions), but also to a multi-dimensional arrangement of PEs 12. In the present embodiment, even-numbered processing is executed by a group of PEs 12 arranged as elements in three or more dimensions (wz directions). This allows sorting to be completed with fewer execution times of processing.

When sorting multiple data items input to the arithmetic device 10 in the same order, the movement destination data for the index data items may be generated as described above and stored in the PE 12, and the input data items may be moved based on the movement destination data.

### (Sorting of data with two-dimensional index data when the number of data items is greater than the number of PEs)

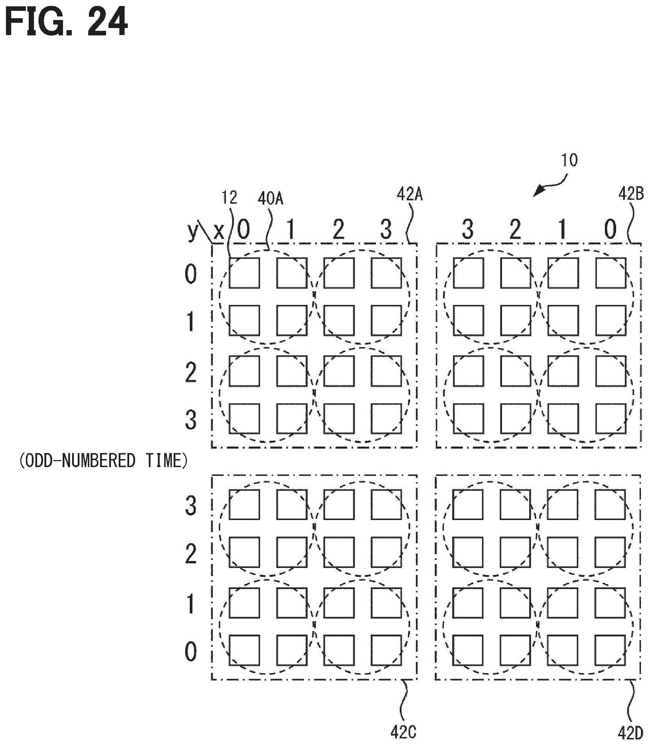

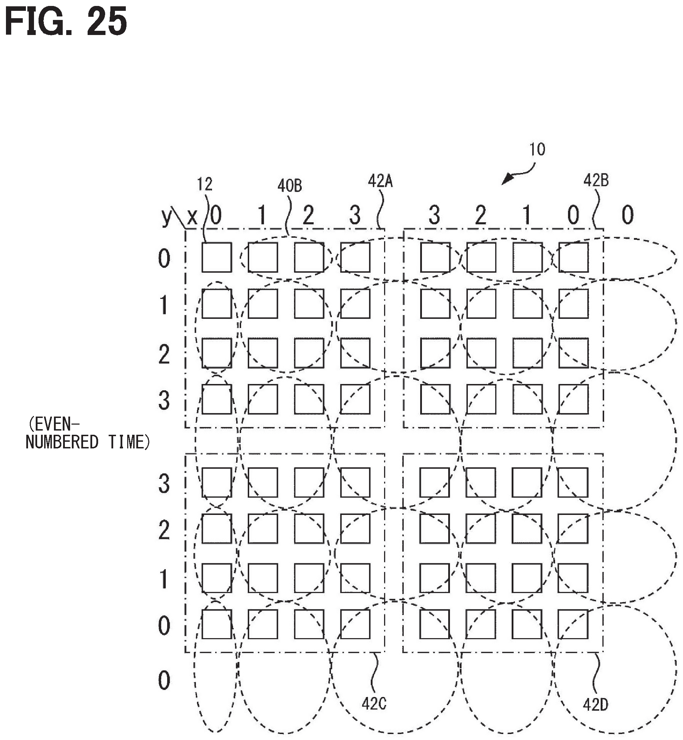

The following will describe a case where the number of input data items to be sorted is greater than the number of PEs 12 and the sorting process is performed with two-dimensional index data with reference to FIG. 24 and FIG. 25. FIG. 24 shows odd-numbered processing, and FIG. 25 shows even-numbered processing, where x represents the column number and y represents the row number.

In the examples of FIG. 24 and FIG. 25, the number of PEs 12 included in the arithmetic device 10 is 16, but the number of input data to the arithmetic device 10 is 64, which is four times as the number of PEs. When the number of input data to be sorted is greater than the number of PEs 12, each PE 12 holds multiple input data items for which respective identification numbers are assigned. In the examples of FIG. 24 and FIG. 25, each PE 12 holds four input data items, and identification number of 1 to 4 are assigned respective input data items.

The multiple PE groups 42 are virtually set such that multiple PEs 12 that hold the data items assigned with the same identification number are virtually divided as one group. In the example of FIG. 24, the PE group 42A corresponds to the first data item, the PE group 42B corresponds to the second data item, the PE group 42C corresponds to the third data item, and the PE group 42D corresponds to the fourth data item.

The multiple PE groups 42 are set so that the PEs 12 constituting the PE group 42 are in the reverse order in at least one of the row direction or the column direction with respect to the reference PE group 42. In the example of FIG. 24, the PE group 42A is the reference group, and the PE group 42B is in the reverse column order relative to the reference group. The PE group 42C has a reversed row order relative to the reference group, and the PE group 42D has a reversed row order and reversed column order relative to the reference group. Therefore, the PE groups 42B, 42C, and 42D are arranged such that the PEs 12 are folded up and down, left, and right, or both, with respect to the PE group 42A corresponding to the reference group. To arrange the data items in reverse order, the selector setting command is issued so that the data items are arranged in reverse order when the data items are input to the PE. When outputting the data, the selector setting command is issued so that the data items that are in reverse order is returned to the normal order. Two wirings 14 may be provided between the PEs 12 so that data can be moved in both the forward and reverse directions at the same time.

The arithmetic device 10 performs the first sorting process for each first group 40A divided in the PE group 42, and then performs the second sorting process for each second group 40B that are divided across multiple PE groups 42. Then, the first sorting process and the second sorting process are repeatedly executed.

FIG. 24 corresponds to odd-numbered processing of the first sorting process. As shown in FIG. 24, the first groups 40A are included in each PE group 42. In the first sorting process, a magnitude determination is performed on the multiple index data items for each first group 40A, and the index data items and the input data items associated with the index data items are moved according to the magnitude determination result of index data items among the PEs as the exchange process.

FIG. 25 corresponds to even-numbered processing of the second sorting process. As shown in FIG. 25, some second groups 40B are divided across multiple PE groups 42. In the second sorting process, the magnitude determination is made on multiple index data items for respective PEs in each second group 40B, and the index data items and input data items associated with the index data items are moved among the PEs as the exchange process according to the magnitude determination result. In FIG. 25, the dashed line indicating the second group 40B shown beyond the PE groups 42B, 42C, and 42D is the second group 40B assuming that there is a PE group 42 adjacent to the PE groups 42B, 42C, and 42D.

The PEs 12 located at the end of each PE group 42 has the same x and y coordinates as the PE 12 in the other adjacent PE group 42. That is, the input data to the second group 40B configured across multiple PE groups 42 is input data assigned with different identification number held in the same actual PE 12. In each PE group 42, the PEs 12 adjacent to another PE group 42 are outer edge PEs 12X located at the ends among the actual PEs 12. That is, in the second sorting process, the outer edge PE 12X sorts the multiple input data held by own PEs as the second group 40B.

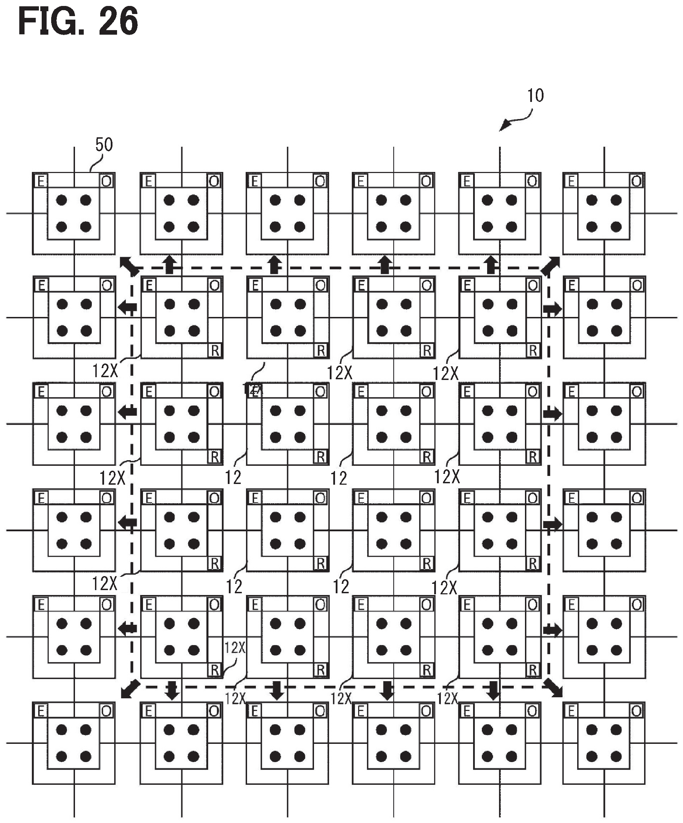

Therefore, the outer edge PE 12X needs to sort four input data items in one PE 12. Therefore, as shown in FIG. 26, first spare PEs 50 may be provided adjacent to the outer edge PEs 12X, and the first spare PEs 50 are used to sort the multiple input data items held by the outer edge PEs 12X in the second sorting process.

In FIG. 26, the PEs 12 adjacent to the outer edge PEs 12X surrounded by the dashed line are the first spare PEs 50. The first spare PE 50 is not a virtual PE, but a PE 12 that is actually provided in the arithmetic device 10, and the first spare PE 50 is connected to another adjacent first spare PE 50 and the outer edge PE 12X by the wiring 14.

In the second sorting process, the outer edge PE 12X moves the input data item held in own PE to the save register 26 of the first spare PE 50, and the outer edge PE 12X and the first spare PE 50 sort the input data items as the second group 40B. Therefore, the first spare PE 50 includes the selector 24, the arithmetic circuit 20, and the save register 26, but does not necessarily include the register 22.

In the sorting process where the PEs are grouped in multiple groups, when the number of input data items is greater than the number of PEs 12, as described above, even when the PEs 12 are multidimensional, the input data is exchanged twice, that is, the even element number of each dimension and the next element number, at odd-numbered times. Then, at even times, exchange process is performed on data of odd element numbers of each dimension and the next element number, totaling two to the power of the number of dimensions.

### (Convolution operation using spare PE)

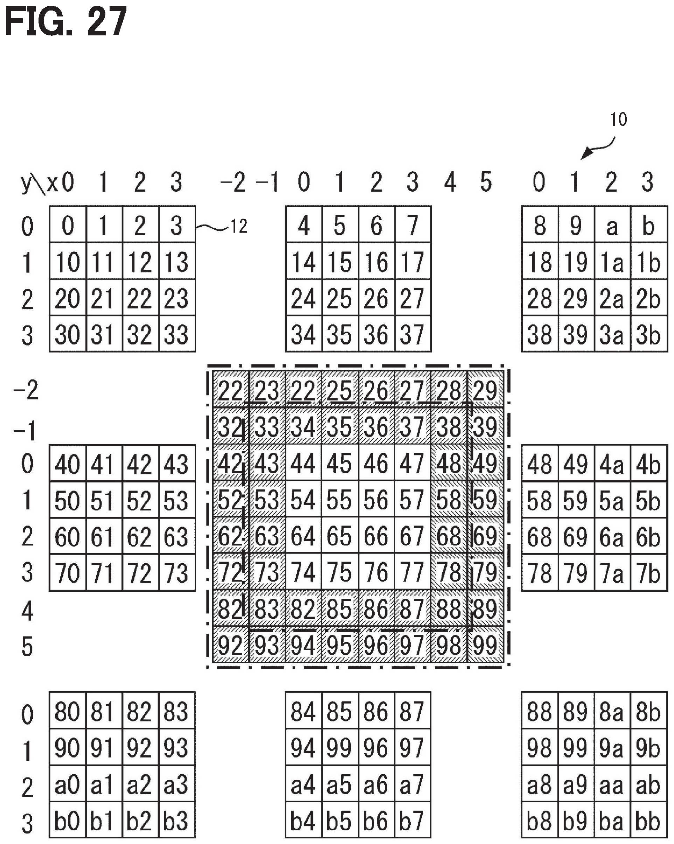

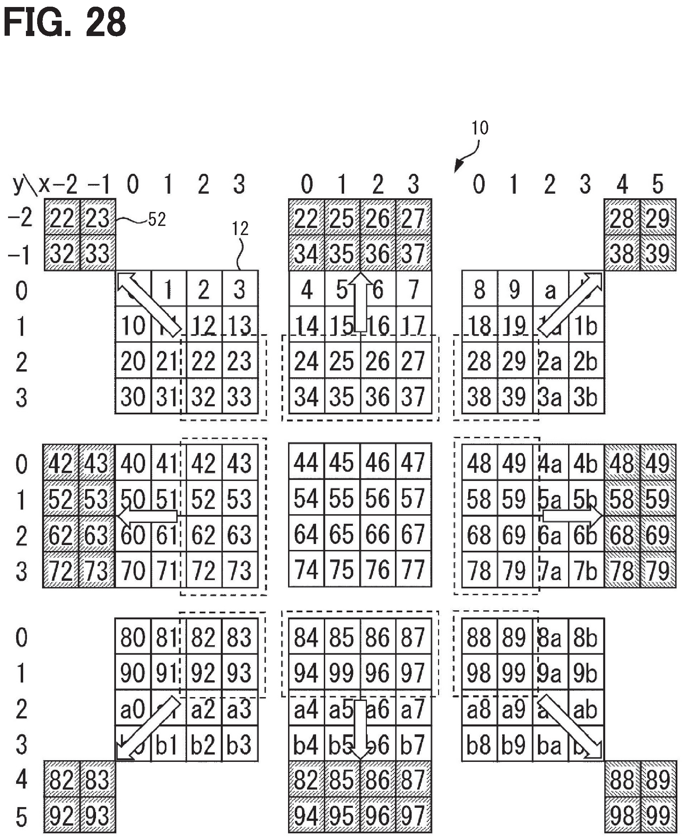

An example of a convolution operation using second spare PEs 52 will be described with reference to FIG. 27 and FIG. 28. The second spare PE 52 does not have an arithmetic circuit 20, but has a selector 24 and a save register 26 and/or a register 22. The PE 12 and the second spare PE 52 then transfer data via the selector 24.

FIG. 27 is a schematic diagram showing the relationship between the data used in the convolution operation and the PE 12 in the present embodiment. In the example of FIG. 27, the arithmetic device 10 includes 16 PEs 12 (4 rows and 4 columns), and each PE 12 holds multiple data items (9 data items). That is, in FIG. 27, multiple PEs 12 indicated by the same xy coordinates are the same PE 12, and FIG. 27 shows that each PE 12 holds nine different data items in a two-dimensional array. A group of data items indicated by (x, y) = (0, 0) to (3, 3) is referred to as a data group. For example, the data groups in the upper left corner of FIG. 27 are "0" to "3", "10" to "13", "20" to "23", and "30" to "33". The central data groups "44" to "47", "54" to "57", "64" to "67", and "74" to "77" are the target data of convolution operation.

The hatched data on the periphery of the central data group virtually represents data necessary for performing the convolution operation on the target data (hereinafter referred to as "necessary data"). The necessary data is expressed by the coordinates x = -2,-1,4,5 and y = -2,-1,4,5. Of this necessary data, the data within the outer dashed dotted line is the necessary data used for the 5×5 convolution operation, and the data within the inner dashed dotted line is the necessary data used for the 3×3 convolution operation. As shown in FIG. 27, the necessary data is data held as a group of data surrounding the target data of convolution operation.

In the present embodiment, the necessary data is held in the second spare PEs 52 as shown in FIG. 28 so that the necessary data can be used as part of the target data. That is, the PEs represented by the coordinates x = -2, -1, 4, 5 and y = -2, -1, 4, 5 in FIG. 28 is the second spare PEs 52, and these second spare PEs 52 are actual PEs provided in the arithmetic device. The data items within the dashed line at the end of the arrow pointing from the PE 12 to the second spare PE 52 in FIG. 28 need to be stored in the second spare PEs 52. Therefore, the second spare PE 52 acquires the necessary data item from the corresponding another PE 12 via the selector 24 and stores the acquired data item in the save register 26.

When the convolution operation is performed on the target data, the second spare PE 52 outputs the necessary data to the PE 12 (the PE 12 at the center in FIG. 28) via the selector 24. This simplifies the transfer of necessary data to the PE 12, enabling faster processing of convolution operation.

In the example of FIG. 28, the second spare PEs 52 are placed outer area of the PEs 12. In another example, the arithmetic device 10 may be provided with one second spare PE 52 equipped with a save register 26 having a large storage capacity, and the necessary data may be stored in this second spare PE 52. In this configuration, the wiring 14 between the second spare PE 52 and the PEs 12 may be multiplexed as necessary.

### (Sorting in SIMD processing)

In the present embodiment, input data is divided into multiple data items having a predetermined number of bits and stored in the multiple PEs 12. Then, processing is performed for each data item divided to have the predetermined number of bits.

As an example, in the present embodiment, a data sorting process will be described in which input data is divided into multiple data items each having a predetermined number of bits and stored in the multiple PEs 12. That is, the sorting process of the present embodiment sorts multiple data items each having a predetermined number of bits. In the sorting process of the present embodiment, parallel processing is performed using SIMD (Single Instruction Multiple Data) processing in order to simultaneously perform data size determination and data movement for multiple sets of data within one PE 12.

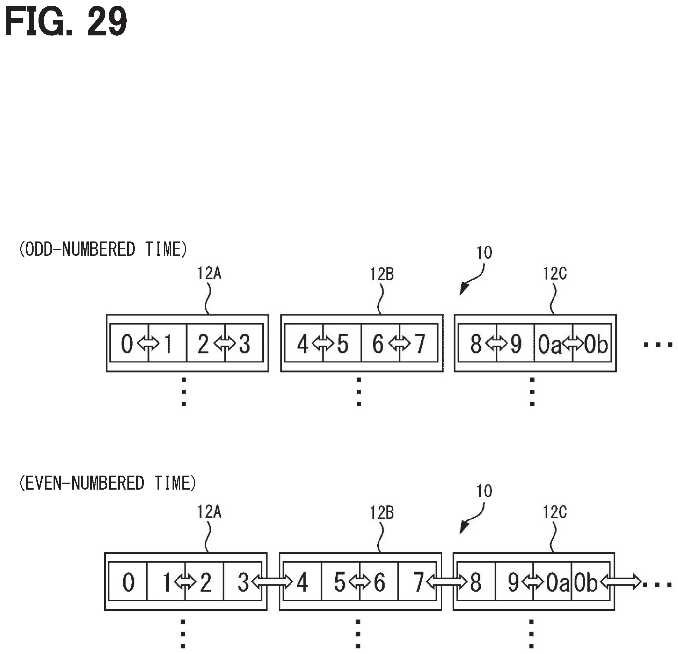

In the present embodiment, as an example, 128-bit input data is input to the PE 12, and the PE 12 divide the 128-bit input data into multiple 32-bit data items and stores the data items in the save register 26. That is, the PE 12 stores four 32-bit data items in the save register 26. The example in FIG. 29 shows a state in which one PE 12 holds four data items. In FIG. 29, the leftmost PE 12A is the PE 12 in the first row and first column, and the PEs 12 are arranged in two-dimensional manner in the row and column directions.

Each data item held in each PE 12 is assigned with a holding position (hereinafter referred to as a "data bit position") in the save register 26 in order to distinguish the multiple data items. That is, "1", "2"..., "0a", and "0b" written in each PE 12 indicate the data bit positions. The data bit positions are consecutively numbered across multiple PEs 12.

Although the register 22, the arithmetic circuit 20, the selector 24, and the save register 26 are not shown in FIG. 29, the PE 12 includes these components as in other embodiments.

When the arithmetic device 10 performs the sorting process on multiple data items, the arithmetic device first determines the size of data item to be paired within one PE 12, and then performs the first exchange process to move the data item within the PE 12 depending on the result of the magnitude determination.

The odd-numbered times in FIG. 29 correspond to the first exchange process. In one PE 12, the arithmetic circuit 20 determines whether the data at the even-numbered data bit position is larger than the data at the odd-numbered data bit position obtained by adding 1 to the even-numbered data bit position. That is, the data bit positions "0" and "1" of the PE 12A form a pair, and "2" and "3" form a pair. Similarly, two sets are generated for the PEs 12B and 12C, and the magnitude relationship of the data is determined between the two sets.

Then, data is moved within the PE 12 according to the determination result of magnitude. For example, when the data at data bit position "0" is greater than the data at data bit position "1", the data at data bit position "0" is moved to data bit position "1", and the data at data bit position "1" is moved to data bit position "0". As a result, the bit position of the data changes depending on the magnitude of the data.

The data magnitude determination on a bit-by-bit basis is performed by outputting the data held in the save register 26 to the arithmetic circuit 20 via the selector 24. The data is then output from the arithmetic circuit 20 to the save register 26 via the save register 26, and is held at a data bit position according to the magnitude relationship.

As described above, in the first exchange process, the magnitude relationship of the data is determined only within one PE 12, and the data is moved within one PE 12. This data magnitude determination and movement is performed simultaneously for multiple sets of data within one PE 12. Therefore, the data magnitude determination and the data movement are performed within the PE 12 by SIMD processing.

The even-numbered times shown in FIG. 29 correspond to the second exchange process, and a set different from that of the odd-numbered times is generated. The magnitude relationship of the data is determined, and data movement is performed within one PE 12. In the second exchange process of the present embodiment, the size of data to be paired with another data set within one PE 12 is determined, and the size of the data moved between adjacent PE 12 via the selector 24 is determined, and the data is moved according to the magnitude determination result. The other set is a combination of multiple data items that is different from the set generated in the first exchange process.

In the second exchange process, data at an odd-numbered data bit position and data at an even-numbered data bit position obtained by adding 1 to the odd-numbered data bit position in one PE 12 are paired together (another pair). Referring to FIG. 29, data bit positions "1" and "2" of PE 12A form a pair, data bit positions "5" and "6" of PE 12B form a pair, and data bit positions "9" and "0a" of PE 12C form a pair. As a result, in the second exchange process, a different set is generated from that in the first exchange process.

In the second exchange process, a data set is also generated between the PE 12 and the adjacent PE 12. For this purpose, data is moved between adjacent PEs 12 via the selector 24. Referring to FIG. 29, the data bit position "3" of PE 12A and the data bit position "4" of PE 12B form a pair, and the data bit position "7" of PE 12B and the data bit position "8" of PE 12B form a pair. In this way, in the second exchange process, data is paired even between adjacent two PEs 12. The data paired between adjacent two PEs 12 is, for example, the data at the largest data bit position of one PE 12 and the data at the smallest data bit position of the adjacent PE 12.

In the second exchange process, the magnitude relationship between these sets of data is determined, and the data is moved according to the result of the magnitude determination.

Then, the sorting process of the present embodiment repeats the first exchange process and the second exchange process. In the sorting process of the present embodiment, as described with reference to FIG. 19, data sorting is performed under a condition that the PEs 12 arranged in multiple rows are virtually regarded as one row.

In the present embodiment, when performing data sorting between multiple PEs 12 that divide input data into multiple data items each with a predetermined number of bits and store them, the first exchange process is performed in which the size of the multiple data items grouped together within one PE 12 is determined, and the data is moved within the PE 12 depending on the result of magnitude determination. Then, as the second exchange process, the magnitude of multiple data items in different sets is determined within one PE 12, and the magnitude of data moved between adjacent PEs 12 via the selector 24 is determined, and the data is moved according to the result of magnitude determination. The arithmetic device 10 repeatedly performs the first exchange process and the second exchange process.

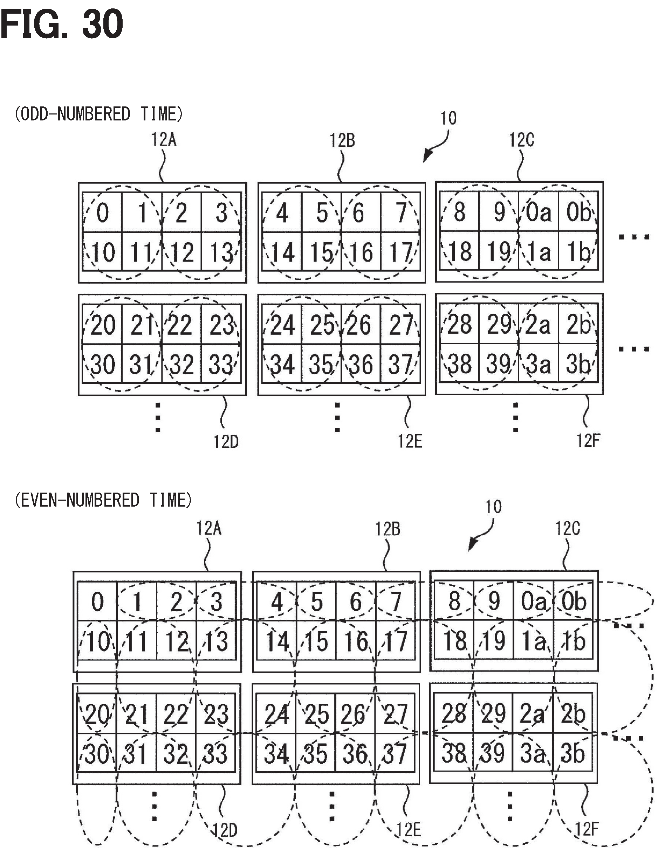

FIG. 30 is a schematic diagram showing two-dimensional sorting process accompanying SIMD processing. In the example of FIG. 30, 128-bit input data is divided into eight 16-bit data items, which are held by each PE 12 in two rows and four columns. As shown in FIG. 30, the divided data items each has data bit positions designated by consecutive numbers so that it can be processed in a matrix across multiple PEs 12.

In the sorting process of the example of FIG. 30, in the odd-numbered iteration of the first exchange process, the magnitude relationship of data is determined for every two rows and two columns only within one PE 12, and data items are moved within one PE 12. For example, in the PE 12A, data bit positions "0", "1", "10", and "11" are grouped as a set, and data bit positions "2", "3", "12", and "13" are grouped as a set. Then, the four data items in each set generated within the PE 12 are compared in magnitude, and the data items are moved according to the result of magnitude determination.

In the even-numbered iteration, which is the second exchange process, a set different from that in the odd-numbered iteration is generated, the magnitude relationship of the data is determined, and data items are moved within the PE 12. In the even-numbered iterations in FIG. 30, data pairs are also generated between adjacent PEs 12, similar to the even-numbered iterations in FIG. 29. For this purpose, data items are moved between adjacent PEs 12 via the selector 24.

In the example of FIG. 30, for example, data items at data bit positions "1" and "2" in the PE 12A are grouped together, and magnitude comparison is made between these two data items to determine the larger data item, and the data items are moved depending on the result of the magnitude determination.

The data item at the data bit position "10" of the PE 12A and the data item at the data bit position "20" of the adjacent PE 12D are grouped together. The data items at the data bit positions "11" and "12" of the PE 12A and the data items at the data bit positions "21" and "22" of the PE 12D are grouped together. The data item at the data bit position "3" of the PE 12A and the data item at the data bit position "4" of the PE 12B are paired.

The data item at data bit position "13" of PE 12A, the data item at data bit position "14" of PE 12B, the data item at data bit position "23" of PE 12D, and the data item at data bit position "24" of PE 12E are grouped as one set. Although the PE 12A and the PE 12E are not adjacent to each other, the PE 12A and the PE 12E are adjacent to the PE 12B and the PE 12C, respectively. In the second exchange process, a set of data is also generated between such multiple PEs 12.

In the second exchange process, the magnitude relationship between the multiple data sets within one PE 12 and between the multiple PEs 12 is determined, and the data is moved according to the result of the magnitude determination. In the example of FIG. 30, the first exchange process and the second exchange process are repeated.

In the present embodiment, the number of rows and columns of data items in one PE 12 is determined arbitrarily according to the number of bits of input data and the number of divisions of each data item, and various circuits are configured according to the determination.

The method of dividing the data into multiple data items each having a predetermined number of bits is not limited to the above-mentioned sorting process. As shown in other embodiments, diagonal movement, arithmetic processing via the selector 24, convolution operations, etc. may be performed on multiple data items each having a predetermined number of bits. The multiple data items divided to have the predetermined number of bits may be restored to one data and then moved or calculated together.

Although the present disclosure is described with the embodiments and modifications as described above, the technical scope of the present disclosure is not limited to the scope described in the above embodiments and modifications. Various changes or improvements can be made to the above embodiments and modifications without departing from the scope of the present disclosure, and other modifications or improvements are also included in the technical scope of the present disclosure.

The following will describe features according to multiple aspects of the present disclosure.

### (Aspect 1)

An arithmetic device includes multiple processors, each of which includes a selector configured to receive data input to the processor and output the data in a set direction. The multiple processors each performs a data movement via the selector with another non-adjacent processor or performs a data movement via the selector in own processor, by processing a selector setting command and an input output command of the data in a single operation.

### (Aspect 2)

In the above-described arithmetic device according to aspect 1, the multiple processors each includes a register, which stores the data and is connected to the selector.

### (Aspect 3)

In the above-described arithmetic device according to aspect 1 or 2, the multiple processors each includes multiple selectors.

### (Aspect 4)

In the above-described arithmetic device according to any one of aspects 1 to 3, the multiple processors each includes an arithmetic circuit connected to the selector. The arithmetic circuit is configured to execute an arithmetic processing on the data. The data movement in the multiple processors and the arithmetic processing executed by the arithmetic circuit are performed by processing the selector setting command and the input output command of the data in a single operation.

### (Aspect 5)

In the above-described arithmetic device according to aspect 4, a part of the multiple processors each includes the arithmetic circuit for executing a specific processing. In execution of the specific processing, the data movement is performed in the part of the multiple processors via the corresponding selectors.

### (Aspect 6)

In the above-described arithmetic device according to any one of aspects 1 to 5, a wiring used for the data movement in the multiple processors is provided. The wiring is provided to each of the multiple processors arranged at a predetermined interval.

### (Aspect 7)

In the above-described arithmetic device according to any one of aspects 1 to 6, in sorting of multiple pieces of score data each of which indicates a size of the data held by each of the multiple processors, the multiple processors each is configured to: determine a magnitude of the score data, which is to be moved to the adjacent processor via the selector; perform an exchange process that moves the score data to the adjacent processor according to a determination result of the magnitude of the score data; and repeat the exchange process for different combinations of adjacent two of the multiple processors.

### (Aspect 8)

In the above-described arithmetic device according to aspect 1, the data input to each of the multiple processors is associated with score data, which indicates a size of the data, or index data, which indicates an order of the data. The multiple processors each is configured to: determine a magnitude of the score data or the index data, which is to be moved via the selector, between own processor and the adjacent processor; perform the data movement of the score data or the index data with the adjacent processor in accordance with a determination result of the magnitude of the score data or the index data; store movement destination data indicating a movement destination of the score data or the index data; and perform the data movement with the adjacent processor based on the movement destination data.

### (Aspect 9)

In the above-described arithmetic device according to aspect 1, the multiple processors each is associated with a relative address, which indicates an address where the data is stored. The multiple processors each is configured to: determine a magnitude of the relative address, which is to be moved via the selector, between own processor and the adjacent processor; perform the data movement of the relative address with the adjacent processor in accordance with a determination result of the magnitude of the relative address; and store movement destination data indicating a movement destination of the relative address. After the data is associated with the relative address after movement, the multiple processors each performs the data movement with the adjacent processor in a movement order reverse to an order indicated by the movement destination data.

### (Aspect 10)

In the above-described arithmetic device according to aspect 8 or 9, when the data related to the score data, the index data, or a relative address is input from an external memory to the multiple processors, the multiple processors each performs the data movement with the adjacent processor based on the movement destination data.

### (Aspect 11)

In the above-described arithmetic device according to aspect 8, the multiple processors are virtually divided into multiple first groups each including three or more processors adjacent to one another. The multiple processors are configured to perform a first sorting process by determining, for the three or more processors included in each of the multiple first groups, the magnitude of the index data and performing the data movement of the index data and the data associated with the index data according to a determination result of the magnitude of the index data. The multiple processors are virtually divided into multiple second groups in different manner from the multiple first groups, each of the multiple second groups include three or more processors adjacent to one another. The multiple processors are configured to perform a second sorting process by determining, for the three or more processors included in each of the multiple second groups, the magnitude of the index data and performing the data movement of the index data and the data associated with the index data according to a determination result of the magnitude of the index data. The multiple processors are configured to repeatedly perform the first sorting process and the second sorting process.

### (Aspect 12)

In the above-described arithmetic device according to aspect 11, when the number of multiple pieces of the data to be sorted in the multiple processors is greater than the number of the multiple processors, each of the multiple processors stores more than one pieces of data by assigning identification numbers to the more than one pieces of data. The multiple processors are virtually divided into multiple processor groups such that each of the multiple processors included in the same processor group stores the data assigned with the same identification number. The multiple processor groups are set such that the multiple processors included in one of the multiple processor groups has a reverse order in at least one of a row direction or a column direction with respect to a reference processor group, which is defined among the multiple processor groups. The multiple processors are configured to perform the first sorting process for each of the multiple first groups divided in one of the multiple processor groups, and then perform the second sorting process for each of the multiple second groups that are divided across the multiple processor groups. The multiple processors are configured to repeatedly perform the first sorting process and the second sorting process.

### (Aspect 13)

In the above-described arithmetic device according to aspect 12, a first spare processor may be provided. The first spare processor is arranged adjacent to one or more outer edge processors located at an edge portion of the multiple processors arranged in two-dimensional manner. The first spare processor is configured to sort multiple pieces of the data stored in the one or more outer edge processors in the second sorting process.

### (Aspect 14)

In the above-described arithmetic device according to any one of aspects 1 to 13, the data input to each of the multiple processors is divided into multiple data items such that each data item has a predetermined number of bits. Each of the multiple processors performs processing on the data in units of each data item divided to have the predetermined number of bits.

### (Aspect 15)

In the above-described arithmetic device according to any one of aspects 1 to 14, a spare processor may be provided. The first spare processor does not have an arithmetic circuit but has a selector and a register for storing the data. The data movement is performed between one of the multiple processors and the spare processor via the selector.

### (Aspect 16)

In the above-described arithmetic device according to any one of aspects 1 to 15, an operation for implementing a required function of the arithmetic device is set in advance for each of the multiple processors or set by the data. Each of the multiple processors performs the operation, which is set different from another processor, according to a request for the required function.

### (Aspect 17)

A data movement method for an arithmetic device is provided. The arithmetic device includes multiple processors and the multiple processors each includes a selector configured to receive data input to the processor and output the data in a set direction. The data movement method includes performing, using the multiple processors, a data movement via the selector with another non-adjacent processor or performing, using the multiple processors, a data movement via the selector in own processor, by processing a selector setting command and an input output command of the data in a single operation.

## Claims

1. An arithmetic device (10) comprising multiple processors (12), wherein
the multiple processors each includes a selector (24) configured to receive data input to the processor and output the data in a set direction, and
the multiple processors each performs a data movement via the selector with another non-adjacent processor or performs a data movement via the selector in own processor, by processing a selector setting command and an input output command of the data in a single operation.

2. The arithmetic device according to claim 1, wherein
the multiple processors each includes a register (22, 26), which stores the data and is connected to the selector.

3. The arithmetic device according to claim 1 or 2, wherein
the multiple processors each includes multiple selectors.

4. The arithmetic device according to claim 1 or 2, wherein
the multiple processors each includes an arithmetic circuit (20) connected to the selector,
the arithmetic circuit is configured to execute an arithmetic processing on the data, and
the data movement in the multiple processors and the arithmetic processing executed by the arithmetic circuit are performed by processing the selector setting command and the input output command of the data in a single operation.

5. The arithmetic device according to claim 4, wherein
a part of the multiple processors each includes the arithmetic circuit for executing a specific processing, and
in execution of the specific processing, the data movement is performed in the part of the multiple processors via the corresponding selectors.

6. The arithmetic device according to claim 1 or 2, further comprising
a wiring used for the data movement in the multiple processors,
wherein the wiring is provided to each of the multiple processors arranged at a predetermined interval.

7. The arithmetic device according to claim 1 or 2, wherein,
in sorting of multiple pieces of score data each of which indicates a size of the data held by each of the multiple processors, the multiple processors each is configured to:
determine a magnitude of the score data, which is to be moved to the adjacent processor via the selector;
perform an exchange process that moves the score data to the adjacent processor according to a determination result of the magnitude of the score data; and
repeat the exchange process for different combinations of adjacent two of the multiple processors.

8. The arithmetic device according to claim 1, wherein
the data input to each of the multiple processors is associated with score data, which indicates a size of the data, or index data, which indicates an order of the data, and
the multiple processors each is configured to:
determine a magnitude of the score data or the index data, which is to be moved via the selector, between own processor and the adjacent processor;
perform the data movement of the score data or the index data with the adjacent processor in accordance with a determination result of the magnitude of the score data or the index data;
store movement destination data indicating a movement destination of the score data or the index data; and
perform the data movement with the adjacent processor based on the movement destination data.

9. The arithmetic device according to claim 1, wherein
the multiple processors each is associated with a relative address, which indicates an address where the data is stored,
the multiple processors each is configured to:
determine a magnitude of the relative address, which is to be moved via the selector, between own processor and the adjacent processor;
perform the data movement of the relative address with the adjacent processor in accordance with a determination result of the magnitude of the relative address; and
store movement destination data indicating a movement destination of the relative address, and
after the data is associated with the relative address after movement, the multiple processors each performs the data movement with the adjacent processor in a movement order reverse to an order indicated by the movement destination data.

10. The arithmetic device according to claim 8 or 9, wherein,
when the data related to the score data, the index data, or a relative address is input from an external memory (30) to the multiple processors, the multiple processors each performs the data movement with the adjacent processor based on the movement destination data.

11. The arithmetic device according to claim 8, wherein
the multiple processors are virtually divided into multiple first groups each including three or more processors adjacent to one another,
the multiple processors are configured to perform a first sorting process by determining, for the three or more processors included in each of the multiple first groups, the magnitude of the index data and performing the data movement of the index data and the data associated with the index data according to a determination result of the magnitude of the index data,
the multiple processors are virtually divided into multiple second groups in different manner from the multiple first groups, each of the multiple second groups includes three or more processors adjacent to one another,
the multiple processors are configured to perform a second sorting process by determining, for the three or more processors included in each of the multiple second groups, the magnitude of the index data and performing the data movement of the index data and the data associated with the index data according to a determination result of the magnitude of the index data, and
the multiple processors are configured to repeatedly perform the first sorting process and the second sorting process.

12. The arithmetic device according to claim 11, wherein,
when the number of multiple pieces of the data to be sorted in the multiple processors is greater than the number of the multiple processors, each of the multiple processors stores more than one pieces of data by assigning identification numbers to the more than one pieces of data,
the multiple processors are virtually divided into multiple processor groups such that each of the multiple processors included in the same processor group stores the data assigned with the same identification number,
the multiple processor groups are set such that the multiple processors included in one of the multiple processor groups have a reverse order in at least one of a row direction or a column direction with respect to a reference processor group, which is defined among the multiple processor groups,
the multiple processors are configured to perform the first sorting process for each of the multiple first groups divided in one of the multiple processor groups, and then perform the second sorting process for each of the multiple second groups that are divided across the multiple processor groups, and
the multiple processors are configured to repeatedly perform the first sorting process and the second sorting process.

13. The arithmetic device according to claim 12, further comprising
a first spare processor arranged adjacent to one or more outer edge processors located at an edge portion of the multiple processors arranged in two-dimensional manner,
wherein the first spare processor is configured to sort multiple pieces of the data stored in the one or more outer edge processors in the second sorting process.

14. The arithmetic device according to claim 1 or 2, wherein
the data input to each of the multiple processors is divided into multiple data items such that each data item has a predetermined number of bits, and
each of the multiple processors performs processing on the data in units of each data item divided to have the predetermined number of bits.

15. The arithmetic device according to claim 1 or 2, further comprising
a spare processor (52) that does not have an arithmetic circuit but has a selector and a register for storing the data,
wherein the data movement is performed between one of the multiple processors and the spare processor via the selector.

16. The arithmetic device according to claim 1 or 2, wherein,
an operation for implementing a required function of the arithmetic device is set in advance for each of the multiple processors or set by the data, and
each of the multiple processors performs the operation, which is set different from another processor, according to a request for the required function.

17. A data movement method for an arithmetic device, wherein the arithmetic device includes multiple processors and the multiple processors each includes a selector configured to receive data input to the processor and output the data in a set direction, the data movement method comprising
performing, using the multiple processors, a data movement via the selector with another non-adjacent processor or performing, using the multiple processors, a data movement via the selector in own processor, by processing a selector setting command and an input output command of the data in a single operation.
